# EUROPEAN PATENT SPECIFICATION

(11) **EP 1 310 077 B1**
(45) Date of publication and mention of the grant of the patent: **09.01.2008**
(21) Application number: 01964112.5
(22) Date of filing: 15.08.2001
(51) Int. Cl.: H04L 29/06

(54) **METHOD AND APPARATUS FOR A WEB-BASED APPLICATION SERVICE MODEL FOR SECURITY MANAGEMENT**
VORRICHTUNG UND VERFAHREN FÜR EIN WEB-BASIERTES ANWENDUNGSDIENSTMODELL FÜR DIE SICHERHEITSVERWALTUNG
PROCEDE ET APPAREIL POUR MODELE DE SERVICE APPLICATIF DE GESTION DE SECURITE FAISANT APPEL AU WEB

(30) Priority: 15.08.2000 US 225796 P; 04.10.2000 US 239019 P; 14.08.2001 US 930029
(43) Date of publication of application: 14.05.2003
(73) Proprietor: Viaquo Corporation, San Jose, CA 95131 (US)
(72) Inventor: SWEET, William, B., Morgan Hill, CA 95037 (US); YU, John, J., Los Altos, CA 94022 (US)
(74) Representative: Abnett, Richard Charles
(86) International application number: PCT/US2001/025730
(87) International publication number: WO 2002/015530

(56) References cited:
- EP-A- 0 097 739
- EP-A- 0 952 718
- US-A- 5 935 209
- US-A- 6 026 167
- US-A- 6 032 184

## Description

### I. BACKGROUND OF THE INVENTION

The invention relates generally to cryptographic techniques for secured distribution of data and information over a decentralized public network, and more particularly to web-based administration, management, distribution, and use of access permission credentials or codes in web-based security key management systems.

### INTRODUCTION

### A. Traditional Public Key Infrastructure Systems

The digital electronic age utilizes five fundamental elements for electronic security: privacy (symmetric encryption), authentication, non-repudiation, data integrity (proof of tampering), and authorization (access management). Currently used techniques in Public Key Infrastructure ("PKI"), which are well-known in cryptography (see, e.g., Bruce Schneier, Applied Cryptography, John Wiley & Sons, 1996, and tutorials at www.rsa.com and www.rsasecurity.com/products/keon/white papers), allow for secured transmission of information from point A to point B, providing authentication, non-repudiation and data integrity. Current PKI techniques, however, cannot provide the critical fifth element for electronic security: authorization. This lack of access management presents a particularly important problem for one class of users: large organizations such as government agencies and corporations, where thousands of users need instant access to millions of pieces of information-but where each person should only have access to the information to which he or she is specifically entitled.

More specifically, traditional PKI systems have three major limitations:
*(a) Coarse-Grained Access.* Traditional PKI systems do not provide a good one-to-many solution to accessing parts of an information repository. In addition, if an individual has access rights to read a file, document or database view, he or she has the right to read *all* of it, and not just some of it. In contrast, an ideal access control technology would allow different people to view different parts of a single report, plan, database query, or financial spreadsheet, and deny them access to other parts. *(b) Centralized Security Adjudication.* Traditional PKI systems have a negative impact on computer system performance because of the computationally intense nature of public key exponentiation, coupled with the centralized nature of security checking. When security servers or permissions servers are used to authenticate and police user information access, as the number of users and pieces of information in the system grow, they invariably become performance and single-point-of-failure bottlenecks. *(c) No Standardized Access Credentials.* Although a traditional PKI system can authenticate a user's identity, it cannot determine what information that person is entitled to either create or access, *i.e.,* the "authorization problem" ofPKI.

### B. The CKM Cryptographic Standard

*Constructive Key Management* ("CKM") is a cryptographic method for distributed cryptographic key management. CKM has been adopted by the American National Standards Institute ("ANSI") as Standard X9.69, and addresses the authorization problem posed by traditional PKI systems. The details of the CKM, X9.69 ANSI standard is fully disclosed in a document entitled *American National Staudard for Financial Services, X9.69-1998, Framework for Key Management Extensions,* American Bankers Association, 1998. U.S. Patent Nos. 5,375,169 and 5,787,173 also disclose details of CKM. CKM is exportable with any cryptographic algorithm or key length. Further details of CKM are discussed throughout this specification, as these details relate to described embodiments of the present invention.

A commercially available implementation of CKM, offered by TECSEC, Inc. ("'TECSEC"), uses the X9.69 ANSI standard in a role-based access system to cryptographically control access to documents created and archived within an organization's isolated, internal database. This role-based system allows database administrators to selectively grant access permissions to network users, called "members," according to each member's individually assigned organizational role, rather than the member's personal identity. Thus, if a user's organizational assignment changes, his or her access permissions are also changed to reflect this new organizational role.

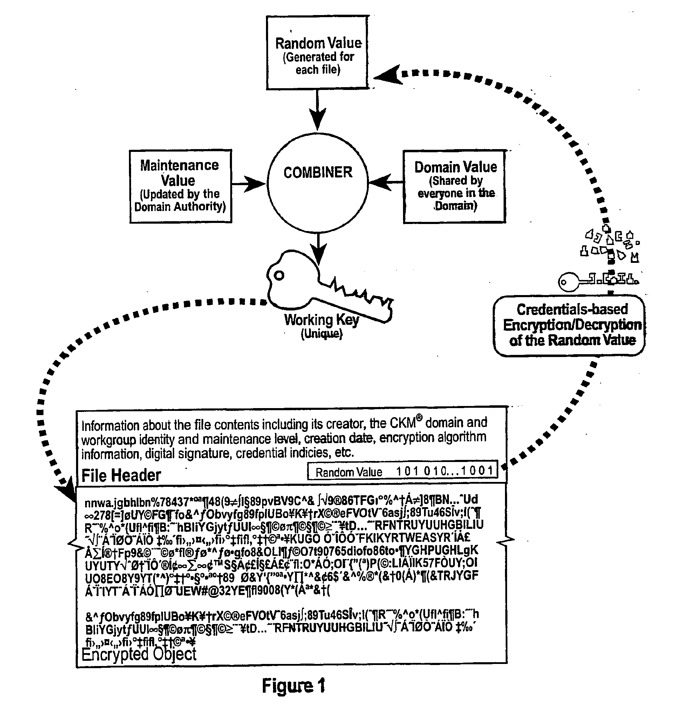

**Figure 1** shows fundamentals of CKM technology as illustrated on the *www.tecsec.com* web site. CKM provides an encryption process by which an organization can manage the distribution and access of information using fine-grained, role-based, differential access permissions, by embedding access permissions within the encrypted object itself. Included in CKM is an encryption key generation process based on two sets of key types: *Working Keys* and *Credential Keys.*

The key used in the encryption (and decryption) of a data object containing the information of interest is called the *Working Key.* It maybe used as a session key or a message-encrypting key that is required by a symmetric encryption algorithm, such as 3DES. The working key-constructed from several pieces of information (called *Values)-*is used to encrypt the data object using a symmetric key encryption algorithm, *and is then discarded*. The values used in constructing the working key for encryption are also used to reconstruct the working key for decryption. The function that combines the values to create a working key is called the *CKM Combiner* and is central to the CKM encrypting process.

Authorization to information is provided in CKM by using a set of "credentials," which broadly relate to an individual's access permissions. Credentials are used to form a *Credential Key,* which itself is used to encrypt working key information that is embedded in the data object's file header (i.e., attached to the encrypted object). Asymmetric values (a Diffie-Hellman-generated key pair) are associated with each credential set. Read/write separation is cryptographically available: read access is equivalent to public key decryption rights (using the private key), and write access is equivalent to public key encryption rights (using the public key).

Access permissions are distributed to company employees as a "member profile," which contains an individual's credentials and pre-specified "domain" and "maintenance" values. The domain and maintenance values reflect, respectively, the employee's organizational unit within the company, and a finite time period during which the employee may have access to company documents. The member profile also contains a file header encrypting key, algorithm access permissions (symmetric algorithm choices), and domain-specific policies. The member profile is generally contained on a removable cryptographic token (e.g., a smart card). Once member profiles have been distributed, encryption and decryption is controlled by the individual's member profile.

To illustrate the general concept of CKM, assume that management desires to post a memorandum to all employees on its company network which contains general information for all employees, but also includes confidential information to be viewed by managers only. With CKM, the portion of the document intended for all employees would be encrypted with an access permission credential that every employee possesses, including the managers; the portion of the document pertaining to management, however, would be encrypted using a credential limited only to managers. When employees download and decrypt the document, all employees would be able to view the common information, but managers would also be able to view the restricted information. This decryption process is seamless: with CKM, it is possible to have each user view a document or other on-line data object and yet not know that his or her access permission (and, therefore, the information he or she is allowed to view) differs from other users.

### C. Other Prior Art

United States Patent US-6,026,167 entitled Method and Apparatus for Sending Secure Datagram Multicasts discloses methods and apparatus for achieving perfect forward security for closed user groups, and for the application of the SKIP methodology to datagram multicast protocols. The system generates additional implicit keys from a key [Kij]N without the necessity of generating a new Diffie-Hellman (DH) certificate or requiring communication between nodes to change implicit master keys. The Message Encryption Keys are changed every time someone enters or leaves the group. European Patent Application EP-0 952 718 A2 entitled Efficient, Secure Multicasting with Minimal Knowledge uses asymmetric Diffie-Hellman keys and certificates to do the same kind of thing. The system is designed for secure multicast including a plurality of participants that can send and receive multicast messages is disclosed. A participant key management component operates within each participant entity where the participant key management component uses a first key that is shared with all the other participants, and a second key that is shared with a sub group of the participants. For a constantly-changing multicast audience that is online at all times, the systems of both patents would involve constantly changing the Message Encryption Keys (MEKs). Reference is also made to EP 977 399, US 5 935 209 and US 6 032 184.

### II. SUMMARY OF THE INVENTION

The invention in its various aspects is defined in the independent claims below, to which reference should now be made. Advantageous features are set forth in the appendant claims.

Preferred embodiments of the invention are described in more details below with reference to the drawings. A summary of features of these preferred embodiments will now be given.

### A. A Web-based CKM System

The preferred embodiments each comprise a cryptographic key management security method and apparatus, hereinafter referred to as "PXa³ *" (Precise eXtensible Authentication, Authorization and Administration).* PXa³ provides a method and apparatus for secured distribution of data and information over a decentralized public network, such as the World Wide Web of the Internet (the "web"). PXa³ 3 creates and maintains a web server account for each user, such that its basic mode of operation works over the Internet-both in terms of the internal administration of its various applications, and in terms of accessing the data files or other objects (or entire systems) that a PXa³ system secures.

PXa³ offers methods for distributing data and information over a decentralized, public network to selectively permit access to on-line documents and other forms of digital content. PXa³ offers a method for controlling access to any form of secured system generally-be it physical (such as a company warehouse) or logical (such as a company computer network).

PXa³ uses a member *Security Profile,* which is unique to a network user and a domain he or she belongs to. In a PXa³ system, a web site server system holds all private keys and certificates, along with the user's security profile, which includes (among other things) the user's access permission credentials and optional biometric templates. The PXa³ server system thus maintains a security profile for each user, and administrators are able to transmit credential updates and other periodic maintenance updates to the users via PXa³ server-based database accounts. These administrators *(Domain Administrators* and *Workgroup Administrators)* also perform their administrative chores via connection to the PXa³ web site, rather than on their local workstations, as is required in existing CKM *(constructive key management)* technology.

In one example, a member's security profile-containing (at least) domain and maintenance values, a file header encrypting key, the member's access permissions credentials, and domain-specific policies-is available from a central PXa³ server as a downloadable "soft token" over any Internet connection. The soft token is downloaded as a set of multi-encrypted objects to a member's client system after the member logs in to the web site and authenticates him or herself. Once downloaded, the soft token may remain encrypted on the client system's persistent memory device, and cannot be decrypted except by the proper introduction of a member's password (or other authentication process) - and then only the necessary portions of a security profile are decrypted when they are required.

### B. Improved Authentication Methods

The preferred PXa³ system embodying the present invention provides an improved authentication process over existing CKM systems. Thus, in a PXa³ system, domain and workgroup administrators log in and authenticate themselves periodically to the web site and administer roles, security policies and credentials to thousands of other network users *(i.e.,* members), keeping the critical administrative information in a well protected and properly backed up web storage system that is accessible from anywhere in the world. Authentication strength for administrators and members can be anything from 1-factor security (a PIN or password), to 2-factor (password plus a token or a biometric), to 3-factor (password+token+biometric), depending upon the needs of the organization. Time and a user's physical location may also be used as authentication parameters.

Members log into the web site at the beginning of each cryptographic session and authenticate themselves with the appropriate technology chosen by the organization. Once a session is open (as defined by retrieving a member token from the PXa³ web site) members work through their day creating or consuming encrypted data objects using their role-based credentials as maintained in their security profiles. Those profiles can be provided to the user as either a hard token (such as a smart card that is synchronized daily via a master profile on the PXa³ web server) or as a downloadable soft token that resides in a temporally limited way on the member's client system; alternatively, the security profile can permanently reside as a soft token on the web server system, yet be accessible to the member for on-demand cryptographic needs over the web.

### C. Integration With PKI

The use of PKI (Public Key Infrastructure) in PXa³ is conventional, and involves public key pairs and certificates for digital signing of CKM objects. Any standard PKI system from Entrust, Baltimore, Verisign and others will work with the PXa³ system.

### D. Various Aspects of PXa³

PXa³ provides a method for web-based security management in which the administration, management and distribution of CKM security profiles is handled entirely over the decentralized public network of the Internet. Selected groups of network users who are to be provided with cryptographic capabilities are first identified. Member accounts are then created for each network user in each identified group, and these member accounts are maintained on a single database. In order to create a security profile for each member, one or more access codes are established for each group of users. The access codes may be, for example, CKM credentials for defining role-based access permissions, which are adapted to be combined with other components to form a cryptographic key according to the X9.69 ANSI standard. At least one security profile containing at least one access code is created for each member, and the security profile is stored in the user's member account. A variety of administrative tasks are also defined for maintaining the member accounts. Such administrative tasks might include, for example, reporting member activities, system events and billing activities, and adding, removing and updating member accounts. In addition, a member token, which enables the member with cryptographic capabilities, is created relating to each security profile. The security profiles and related member tokens are secured, for example, via hard tokens, soft tokens, biometric identification, and/or a password and user ID. The member tokens are distributed over the network to individual network users upon authenticated request and according to each individual user's security profile.

The administrative functions and/or the activities relating to creating member security profiles are accomplished remotely over the Internet. Creating and distributing the security profiles and member tokens may be accomplished either manually by the user, or automatically (*i.e.,* transparent to the user).

PXa³ provides a centralized security management system for administering cryptographic capabilities, such as CKM working keys and/or security profiles, over the decentralized public network of the Internet. This system includes a set of server systems and member domains, where each member domain is maintained on at least one of the servers. One or more system administrators perform system maintenance tasks. Network users who are members of a domain are associated with that domain via a member account. A set of member security profiles, where each security profile is uniquely associated with a member account, provides cryptographic capabilities to the network user who is associated with that member account. The system also includes a set of administrative tasks for maintaining the member accounts, and domain administrators are able to perform these administrative tasks remotely over the network. The administrative tasks may include, for example, reporting and accounting tasks relating to each member account; domain administrators may further be divided into hierarchically structured groups, according to different levels of the administrative tasks.

Each member account includes member identification and authentication, as does at least one server system.

PXa³ provides a web-based, client-server architecture for distributing cryptographic capabilities, such as CKM working keys and/or security profiles, over the Internet. In this aspect of the invention, member tokens provide cryptographic capabilities to authenticated Internet users, and a set of server systems manage the distribution of these member tokens to individual client systems via the Internet. The client-server system includes a module for requesting a member token from at least one server system. Each individual client system includes a module for receiving the requested member token, and a module for utilizing the cryptographic capabilities provided by the member token. The client-server system also includes a module for securely distributing a requested member token from a server system to a client system over the decentralized public network of the Internet.

An authentication module resides on the client and/or server systems. In addition, a session manager on each client system provides individual users with the ability to request new or updated tokens, where the member token retrieval process may include either manually or automatically, updating the token.

A further aspect of the invention provides a related method for distributing cryptographic capabilities to a plurality of network users over a decentralized public network. In a method embodying this aspect of the invention, a request for an access permission security profile is received on behalf of a network user (and may be initiated in-band by the network user). The request is then authenticated via, for example, biometric identification, a hardware or software token, user location, time of the request, and/or a personal identification number. The method includes a step wherein an access permission security profile is created (this step may occur at any point in the process). The access permission security profile is used in forming a cryptographic key for enabling the network user to decrypt selected portions of an encrypted object. The security profile is then either (a) securely transmitted to the network user over the network, or (b) used to generate a cryptographic working key, in conjunction with information associated with an encrypted object, in which case, the working key is then securely transmitted to the network user over the network.

PXa³ provides a method and apparatus for cryptographically securing the distribution of information and associated cryptographic capabilities over a decentralized public network-such as the Internet-to a broad group of network users. In this embodiment, the information to be distributed is contained within one or more computer representable data objects. The data object(s)'s creator encrypts each object using a working key created from a set of access permission credentials. Each access permission credential ensures that only authorized users (i.e., those users who are in possession of the same set of credentials) are able to decrypt the encrypted data object(s). Once so encrypted, the object(s) may be broadly transmitted over the network, without having to specifically target individually identified network users. On the decryption side, upon receiving an initial request for an access permission security profile (including credentials) on behalf of a network user, the system authenticates the request via, for example, the same authentication techniques as mentioned above. Once the request is authenticated, the access permission security profile (with credentials) is securely transmitted to the authorized network user over the public network, using any one of a variety of known encryption methods. In one embodiment of the present invention, the security profile may be set to expire at some future time, according to an expiration procedure that is preset by an administrator. Until such expiration, subsequent data object encryption or decryption may be carried out by means of the same security profile (and its included access permission credentials). No additional transactions will be required of the PXa³ web site until the security profile expires.

PXa³ provides a method and apparatus for generally controlling access to a secured system. In this embodiment, the system to be secured may be, for example, a physical system, or a logical system; additionally, it may be either static or dynamic. The PXa³ system allows for selected portions of the system to be secured. The system also utilizes one or more groups of system users, who are to be allowed access to which secured portions of the system. An access code must also be established for each group. The access codes are then systematically assigned to the various secured portions of the system; each access code is adapted to be combined with other components to create a key for controlling access to the selected portions of the system. The access codes themselves are secured within the system using biometric identification methods, a smart card and personal identification number, or any other method for authenticating the user. The system then distributes the secured access codes to users of the system according to each user's defined group.

### E. Advantages Of PXa³ Over Existing CKM Technology

There are a number of unique advantages to a web-based PXa³ system when compared to the standalone, enterprise network implementations of existing CKM systems prior to PXa³. These advantages include:
*(a) Mobility.* A user or an administrator can travel the web and log in from anywhere to the PXa³ system, and only needs the appropriate authentication *(e.g.,* user ID and password, biometrics, or smart card, depending upon the authentication choices the domain policy specifies). Assuming that soft tokens are authorized in the domain, a member may carry his portable computer with him and thus may only have to log in briefly once a day or once every other day to renew the soft token.
*(b) Scalability.* A standalone CKM system consists of many separate workgroups within a domain, with each workgroup administrator separately responsible for installing and maintaining his or her system, and for providing workstation database backup. The drawback of such a system is that it is not very scalable, and it is likely that issues of overall systems management and administration, growth, data backup, or system memory or performance constraints will become problematic. The PXa³ system embodying the present invention, on the other hand, is extremely scalable (as user or administrator volume grows, simply add servers), and avoids problems of system performance and storage constraints, providing the ability to ramp up to large numbers of members virtually overnight.
   Furthermore, with respect to traditional PKI systems generally, PKI-only systems are inherently not scalable for applications such as the one-to-many information access management needs of medium to large organizations. The key and access management mechanisms for large PKI-based populations goes non-linear very quickly as the system grows. A PXa³ system, on the other hand, is an extremely scalable system that can grow to millions of users, where key and access management algorithms are always a linear function of the number of users.
*(c) Standards-based* The preferred embodiments of the present invention are based upon a host of standards, including the PKCS and ANSI X9.69 encryption standards, as well as BEA WebLogic, Oracle, J2EE and HTTPS. Such standards are well-known by one of ordinary skill in the art.
*(d)Cost and Convenience.* Costs associated with implementing a PXa³ system are substantially lower than the costs associated with existing, competing technologies. The big expense in deploying CKM is not in the cost per seat or the smart card and reader, but rather in the ongoing training, systems integration, and administrative work necessary for setting up and maintaining the infrastructure-especially for domain authorities and workgroup administrators. Aside from reducing costs, the decentralized, web-based approach of the present invention can provide a lot of additional convenience, including:
   1) A professional and readily accessible training tool (simply access the PXa³ site for training programs);
   2) An easy way to download necessary member and administrative software modules, and to ensure that each and every member always has the latest version of the PXa³ system authorized at the time;
   3) An easy way to set up and maintain domain and workgroup administrative functions-from anywhere; once the administrator's work is done, all of the critical data is safely stored away at the PXa³ web server;
   4) No smart card hardware to install or integrate into the member's client system;
   5) Demonstrations, trials and pilot tests can be created virtually overnight, since all that is required is that an account be set up and a domain authority appointed and trained, enabling him or her to set the domain security policies and create the appropriate credentials;
   6) The bureaucratic hassle associated with justifying a new security access management system within a large company can be avoided, since the web-hosted PXa³ service is "self-contained," easy to acquire and use, and available on a monthly or other periodic "rental" fee basis and can thus be purchased by lower management budget authority.
   7) Customer branding is facilitated through the design of the PXa³ user interface, and customers are allowed to select their own load balancer and firewall products.
*(e) Better Security.* A PXa³ system has substantially less potential for illegal surreptitious access to administrative systems during off-hours, better authentication of the administrator(s), and much-reduced requirements for physical security of the main database of administrative and member information than existing CKM systems. Furthermore, a PXa³ system has rapid response for maintaining users and foiling security attacks (administrators can change anyone's status immediately and thus reduce the risk of rogue users, whereas a rogue user with a standalone smart card system can continue to operate until the card times out-perhaps a month or so).
   In addition, the PXa³ system preferably uses HTTPS for key exchange. This key exchange mechanism forms the basis for a secure Internet key distribution system. Mobile phone usage is one of the applications that can benefit from such a system. The modular design of the PXa³ server systems also provides strong security through firewall and isolation techniques, which makes it very difficult for attackers to gain access to the system.
   One embodiment of the present invention may additionally use smart cards or other tokens (hardware or software) at a member's client system, requiring each member to log in to a central PXa³ server periodically, so that his or her smart card (or other form of token) can be synchronized with centrally maintained security profiles. In one embodiment, for example, PXa³ members utilize a biometric authentication function along with a smart card and PIN, delivering 3-factor security. This combination of web server and smart card provides a number of benefits that a standalone CKM system cannot provide, including high scalability of the administrative functions, better centralized security and backup protection of database information for members and administrators, and more precise control (synchronization) of member smart cards on a daily (or other time metric) basis.
*(f) Key Recovery.* PXa³ system architecture makes it possible for domain authorities to provide access to encrypted files for which key values may have been lost by members. This feature has two benefits: (1) organizations can encrypt their critical information without fear of loss due to lost keys; and (2) PXa³ satisfies the emergency access needs of criminal investigation and national security authorities (a court order can compel a workgroup administrator to recreate the necessary keys), and is thus easily exportable around the world.
*(g) Versatility.* PXa³ is extremely flexible, is compatible with traditional public key infrastructures, and can be implemented with smart cards to hold member security profiles, or with a PXa³ server and soft tokens, or both. With PXa³, a member can travel to any Internet-connected location in the world and still operate in complete security, needing only his authentication characteristics (e.g., password, time, location, biometrics and/or smart card token).
*(h) Performance.* Public key cryptography has a debilitating effect on computer performance, and centralized security/permissions servers typically end up becoming resource intensive bottlenecks, as well as single points of failure. PXa³ uses public key cryptography very sparingly, and delegates most of the cryptographic processing out to thousands of individual client devices (desktops, laptops, mobile phones, etc.), and not to centralized security or permissions servers. This means that PXa³ cryptography is hundreds of times faster than traditional public key-based cryptographic systems, and performance bottlenecks are not likely to appear in the system, no matter how large it becomes.

### III. BRIEF DESCRIPTION OF THE DRAWINGS

The invention will now be described in more detail, by way of example, with reference to the drawings, in which:
Figure 1 illustrates the fundamentals of CKM technology (Prior Art).
Figure 2 is a system overview of one embodiment of the present invention.
Figure 3 illustrates the CKM encryption process used by the preferred embodiments of the present invention.
Figure 4 is a flowchart for a process that one embodiment of the present invention follows.
Figure 5 illustrates the concept of credential categories.
Figure 6 is a flowchart for a process that another embodiment of the present invention follows.
Figure 7 is a flowchart for a process that a third embodiment of the present invention follows.
Figure 8 shows a higher-level aspect of one embodiment of the present invention. This figure relates to an overall client-server architecture, but focuses on the server side of the system.
Figure 9 shows further detail of the server side, administrative architecture of one embodiment of the present invention.
Figure 10 shows a three-tier, Internet implementation architecture for one embodiment of a web-based application service model of the present invention.
Figure 11 relates to Figure 8, and shows one embodiment of the member client side of the system.

### IV. DETAILED DESCRIPTION OF THE PREFERRED EMBODIMENTS

PXa³ *(Precise eXtensible Authentication, Authorization and Administration)* allows the distribution of encrypted data objects from a distributor to a broad audience over a decentralized public network, where the distributor knows neither the identity nor the related access permissions of each member of the audience. PXa³ provides a basis for the secure broadcast and storage of sensitive material over a public network, such as the Internet or a cellular phone network. New members to the audience are authorized according to their credentials, which are assigned to the members by an administrative authority and securely distributed over the public network as well. PXa³ uses features of existing CKM *(constructive key management)* technology that can take multiple encrypted data objects and encrypt them within another encrypted data object. This "object-within-an-object" feature provides PXa³ with the ability to selectively decrypt objects according to access permissions previously given to members.

The following detailed description discusses the generic, underlying features of a PXa³ system, and describes of a number of embodiments of the present invention.

### A. The Underlying CKM Architecture For PXa³

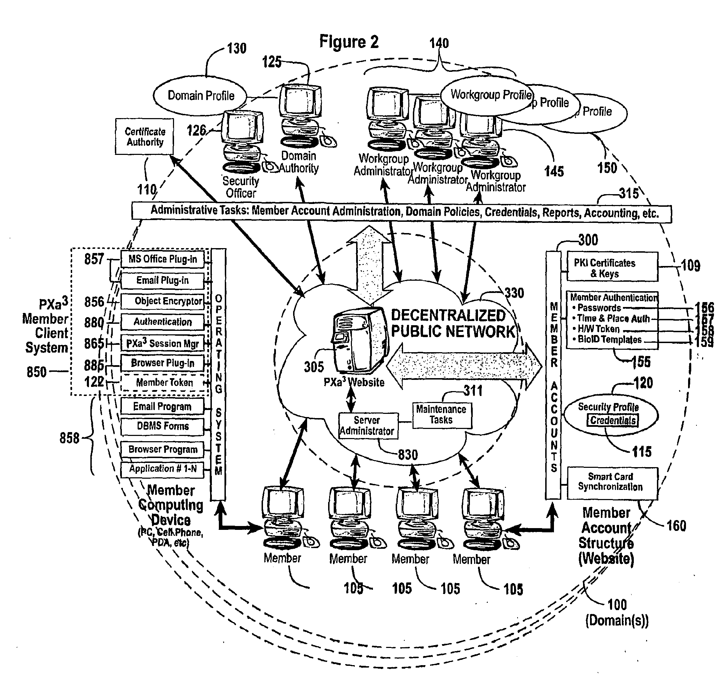

**Figure 2** illustrates a system overview of one embodiment of the present invention, PXa³, which implements a general, web-based application service model for security management.

### 1. The CKM Domain

The highest unit of organization in a PXa³ System is called a CKM *Domain* 100. A CKM domain, such as domain 100, is a unique, independent entity that includes all CKM resources needed to function on its own. CKM security policies, procedures, credentials, and roles are all determined at the domain level. Although the largest unit of organization supported within CKM, a domain is fully scalable to a wide variety of needs. A CKM domain, such as domain **100,** may be as large as an entire enterprise or as small as a single department. Small businesses would likely establish a single domain for the company, and large enterprises would establish many domains for major divisions, different locations, or other organizational structures. Individual users of a PXa³ system are called *Members* **105,** which refers generally to the user's membership within a domain.

While domains are freestanding and independent, they do not need to be isolated. CKM domains may share access rights and privileges with other domains in a *trusted* relationship. Additionally, users of a PXa³ system may participate as members of multiple domains, even if a trust relationship between the domains has not been established. The CKM domain may have a direct relationship with a PKI Certificate Authority (CA) **110,** and preferably uses PKI for signing each encrypted data object by whomever has created or originated the object (the object's "creator").

### (a) Trusted Domain Relationships

In one embodiment of the present invention, domain **100** may provide specified access privileges to members of another domain by establishing a trust relationship. The trust relationship is established when one domain provides a subset of CKM credentials **115** (elaborated below) to another domain. Preferably, CKM credentials are shared only at the (first) domain level, and thus should not be sent directly to members of another (second) domain until a trusted relationship has been established. Once trust has been established, however, the second domain maintains and distributes *Imported Credentials* using its own methods and policies, and these imported credentials are stored in its members' *Security Profiles* **120** (elaborated below), as part of each of its members' credentials **115**. Once distributed, members of the second domain may use the imported credentials to share information with members of the first domain, but all members continue to be bound by the policies and procedures of the domain in which they hold actual membership (i.e., their *Log On Domain).* When a PKI CA (Certificate Authority) **110** is included in this key management architecture, a third-party authentication model is added to the overall trust relationship.

### (b) Untrusted Domain Relationships

An individual may be a member of several CKM domains regardless of whether the domains have established a trust relationship. That is, two or more domains may grant membership independently to the same individual. In this case, a PXa³ system sees the single individual as several members-one for each domain. In this type of untrusted relationship, the member can logon to each domain independently, using separate security profiles for each domain, and possess separate credentials to access information within each domain.

### (c) The Domain Authority and Security Officer

*A Domain Authority* **125** provides top-level management to a CKM domain **100**. Although a person or persons may assume the responsibility of the domain authority, many of the domain authority functions may also be automated. A *Security Officer* **126** is a "super" domain authority, who initially creates the domain authority(ies) **125** and otherwise initializes parameters of a domain **100,** such as domain policies, etc. In one embodiment of the present invention, one security officer **126** per domain 100 is sufficient.

A domain authority **125** (and, at a higher level, the security officer **126**) is responsible for performing a certain subset administrative tasks **315.** For example, in one embodiment of the present invention, the domain authority **125** (and/or security officer **126**) sets up a domain 100 by performing the following functions:
(a) Names the domain and creates its unique *Domain Value* (used in cryptographic functions);
(b) Establishes and updates a number of *Maintenance Values* (used for revocation of a member's access permissions, and to control information access to specific time windows);
(c) Sets policy defining the outer parameters of the PXa³ system's usage, including whether security profiles are smart card (token)-resident, PXa³ server-resident, or soft token-resident. (One of ordinary skill in the art will recognize that a "soft token" is a special ephemeral file that is not allowed to exist on a hard disk in unencrypted form. When brought into RAM, the soft token's various individual parts still remain encrypted, and are only decrypted long enough to perform necessary operations.) In one embodiment of PXa³, a soft token allows the critical cryptographic functions of calculating working keys, and creating and verifying signatures, to be temporarily distributed to the member's client system via a web-based technique that does not employ hard tokens (*e.g.*, smart cards), thereby minimizing performance problems at the server. Also, in a web-based environment, the soft token allows a member to continue to operate for a (domain-settable) short time period, even though the network connection to the Internet server may have been disconnected (e.g., while traveling on an airplane);
(d) Establishes *Credential Categories* (elaborated below), and may optionally digitally sign role-based credentials **115** (also elaborated below) within the credential categories, which are used to cryptographically control a members access to information;
(e) Selects and optionally renames the cryptographic algorithms available in the domain;
(f) Selects and configures *Identification and Authentication* data objects (elaborated below) that are available in the domain;
(g) Registers workgroups and their administrators, through which credentials are distributed;
(h) Digitally allocates and may optionally sign individual membership keys and authorizations related to initiating a member into the PXa³ system;
(i) Registers and may optionally digitally sign CKM-enabled applications;
(j) Creates and distributes *Workgroup Profiles* (elaborated below), which define a subset of credentials, permitted algorithms and the rights and policies to be enforced by a specific workgroup; and
(k) Determines trust relationships with other domains.

### (d) The Domain Profile

*A Domain Profile* **130** refers to all credentials, policy settings, and algorithm permissions established by the domain authority **125** and available within the CKM domain **100.** The domain profile **130** also includes the domain's name and value, the maintenance value(s) (elaborated below), and other information identifying the domain.

### 2. The CKM Workgroups

A CKM domain **100** includes at least one (and usually several) *Workgroups* **140**. A workgroup clusters members (or smaller workgroups) based on common needs and rights to information. In one embodiment of a PXa³ system, workgroups **140** are established so as to parallel departments, locations, projects, or other intuitive organizational, topographical, or logical subdivisions.

### (a) The Workgroup Administrator

*A Workgroup Administrator* **145** (WA) typically manages the workgroups **140**. The responsibilities performed at this level may be by a person interacting with software, or they may be automated in part or in full. In one embodiment, these responsibilities will include the following:
(a) Refining policy settings (as allowed by the DA) to provide further restrictions than those originally granted to the workgroup by the domain authority;
(b) Registering individuals who become members of the workgroup;
(c) Assigning subsets of credentials and access permissions available in the workgroup profile (further defined below) to individual member security profiles (also defined below);
(d) Assigning, distributing and updating member security profiles to members.

A PXa³ system thus allows members to receive credentials, policy settings, and access permissions as set up by the domain authority and distributed by the workgroup administrator.

### (b) The Workgroup Profile

The *Workgroup Profile* **150** contains all credentials and access permissions available for distribution to members **105** of a specific workgroup **140.** It also includes the policies governing the workgroup's use of the PXa³ system. Workgroup profiles may differ from other workgroup profiles of the same domain, thereby defining the unique rights and needs of each workgroup **140** within a domain 100. As mentioned above, in one embodiment, the domain authority **125** creates workgroup profiles **150.**

### 3. The Member Security Profile

Still referring to Figure 2, a member's *Security Profile* **120** includes algorithm access permissions, credentials **115,** domain and maintenance values, a file header encrypting key, optional biometric templates, and domain-specific policies (the algorithm access permissions together with the credentials provide a member with a set of access permission rights). If a companion PKI system is used, a "public" CKM membership key for each member is retained by the workgroup administrator **145** and is not posted for public use. The security profile 120 may also include the "public" CKM membership keys of the domain authority and workgroup administrator. The specific informational content of the security profile may vary, depending upon the actual implementation. For example, the security profile 120 may also include one or more global and workgroup membership (individual) PKI private keys and digital certificates used for encryption or signing in PXa³ and other cryptographic systems, plus optional member biometric templates. (One of ordinary skill in the art will recognize that a biometric template is a "shorthand" version of a biometric data file recorded by a sensor. A template is much smaller than the originally recorded data file, yet is precise enough to accurately represent that person in order to make comparisons to a stored "enrollment" biometric template, in order to verify a person's identity.)

In one embodiment of the present invention, a member's security profile **120** is contained within a *Member Token* **122,** which may take many forms. For example, a security profile **120** may be stored as an encrypted member token in volatile or nonvolatile storage on a member's local client system device (a "soft token"), on a network server such as PXa³ server, or on a physical member token such as a smart card. The preferred embodiments of a PXa³ system use individual *Member Accounts* **300** stored on a PXa³ *Web Site* **305** (where the web site **305** is configured with multiple servers, described in detail below). On each member account **300** is maintained a member's security profile **120** for authorizing access to encrypted data objects. The member accounts 300 may also store other system permissions and information.

For example, in one embodiment of the present invention, a member **105** logs into the PXa³ web site **305** and authenticates him or herself, typically via a user ID and a password. If the authentication is successful, a PXa³ server system will download an encrypted ephemeral soft token to the member's client system (desktop, laptop, mobile phone, wireless personal digital assistant, etc.) which, after enrollment, will contain PXa³ client software. Once the soft token is safely deposited into the member's client system, the member may use the PXa³ system to encrypt or decrypt objects as he or she goes about his or her daily business.

This soft token process gives a member the ability to operate for a period of time without an Internet connection, since the soft token can perform all of the functions normally performed by a smart card (a "hard token"). The length of this ephemeral time period is a settable parameter selected by the domain authority **125** or other administrator, as is whether or not a member is entitled to soft token usage. With this system, members can be authorized for longer-lived soft token use when they are expected to be traveling or otherwise out of touch with the Internet ("roaming"). Once the soft token times out, the system no longer will encrypt or decrypt objects, and the member must log back into the PXa³ web site **305** and authenticate him or herself at the next session in order to download another encrypted soft token. Thus, in one embodiment of the present invention, a token synchronization module **160** requires each member to log in to the PXa³ web site **305** periodically, so that his or her smart card (or other form of token) can be synchronized with centrally maintained security profiles **120.** As mentioned above, in one embodiment, the form of a member's security profile **120** is configurable by the domain authority **125.** One of the policies carried within the domain profile **130** determines where the member security profiles are allowed to reside.

### 4. Maintenance Values

One embodiment of the present invention makes use of an existing CKM technology concept called a *Maintenance Value.* Preferably, a maintenance value consists of two levels: *a Forward Maintenance Level* (FML) and a *Backward Maintenance Level* (BML). The Forward Maintenance Level is used to deny a domain member access to CKM encrypted information beyond a specific point in time, while the Backward Maintenance Level is used to deny a domain member access to information before a specific point in time. In a PXa³ system, maintenance values therefore provide the ability to lock a domain member into a specific window of time. This time-based access control method allows the domain authority to specify and limit exactly what information a domain member will be able currently to access, as well as what information that member may see in the future. From a security standpoint, maintenance values thus allow the system to be re-keyed periodically.

### (a) Domain Maintenance Values

In one embodiment, each domain **100** has a maintenance value referred to as the *Domain Maintenance Value.* The domain maintenance value includes a forward maintenance level and a backward maintenance level. These levels, however, may be updated independently, although the setting for the backward maintenance level may not generally exceed the setting for the forward maintenance level. The forward maintenance level for the domain should be thought of as the horizon-nothing for that particular domain may exist in the system beyond that point in time.

### (b) Member Maintenance Values

Each domain member **105** is also preferably assigned a *Member Maintenance Value* that corresponds to one or more domain values. New members are given the domain's current FML. The FML and BML settings for an individual member may also be updated, although these settings may not generally be greater than the domain maintenance value settings.

### B. The CKM Encryption Process

### 1. Basic Overview Of The Encryption Process

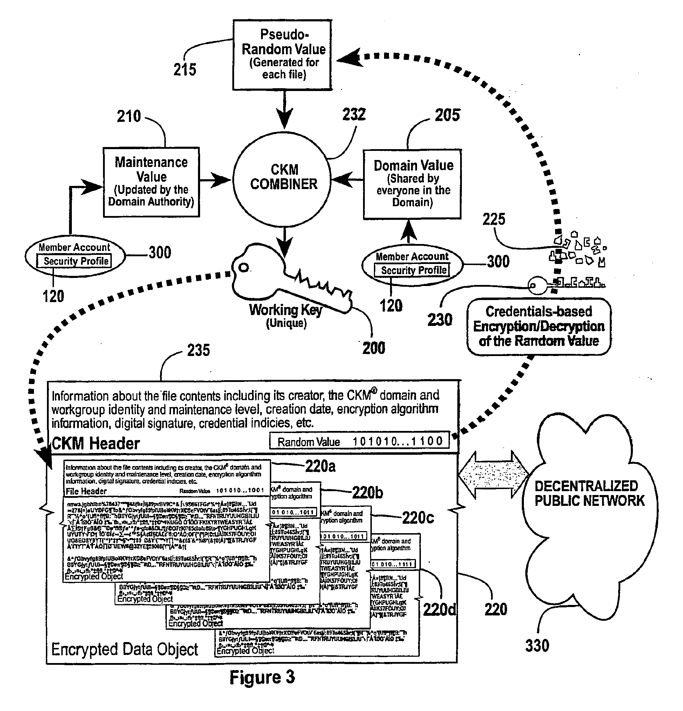

In the preferred embodiments of the present invention, the underlying CKM technology used by PXa³ is a distributed cryptographic key management system adopted as ANSI standard X9.69. Using the X9.69 ANSI standard, the preferred embodiments of PXa³ construct a symmetric key called the *Working Key,* used to encrypt a data object. The CKM encryption process, shown in **Figure 3,** employs three key values that are used to construct the working key **200:** a *Domain Value* **205,** a *Maintenance Value* **210,** and a *Pseudo-Random Value* **215** .

The domain value **205** is used as a system key that gives system access to everyone in the domain **100** (Figure 2). As described above, in large organizations, domains can be linked together via trusted relationships. Thus, in one set of embodiments of the present invention, the domain value **205** is distributed to all members **105** (Figure 2) of a domain **100** (Figure 2) via the member's PXa³ member account **300** and security profile **120** maintained therein.

The maintenance value **210** is used to control domain membership by periodically updating the domain value **205** that is distributed to all currently authorized members. A workgroup administrator **145** may also eliminate undesirable members from future access to the system simply by updating the maintenance value to currently authorized individuals: as described above, the maintenance value **210** allows precise time frame control over access to data for specific members, since members can be given maintenance values corresponding to a fixed time period(s), during which they are allowed access. Thus, as mentioned above for one set of embodiments of the present invention, a member's security profile **120** (maintained within a PXa³ member account **300)** includes the maintenance value **210.**

The third value used to create a working key **200** is the pseudo-random value **215.** A pseudo-random value **215** is automatically generated anew each time a data object **220** is encrypted, making the working key **200** a one-use key that is unique to each encrypted data object **220.** In one set of embodiments, the working key itself is not stored, but is created at the beginning of the encryption process and discarded after use. It is subsequently recreated when needed for decryption purposes, but only by members with appropriate credentials.

To segregate access to encrypted data objects among different groups of authorized members, the pseudo-random value **215** is secured by encrypting it with another key, which is assembled from specifically selected member credentials **225,** referred to as *Access Permission Credentials.* Using member credentials in such a manner defines the readership for each encrypted data object: only those individuals having the access permission credentials that were used to form a *Credential Key* **230** in the encryption process can decrypt the pseudo-random value **215**, which is necessary to create the working key needed to decrypt the encrypted data object **220.** (Furthermore, and as elaborated below, access permission credentials **225** may exist and can be distributed to individual members *independently of any data object encryption).*

Figure 3 further illustrates one process by which a data object is encrypted using existing CKM technology. A member **105** (Figure 2) creates a data object 220 (e.g. a data file containing confidential information) that may optionally be divided up into several embedded objects (e.g., file sections), for example **220a, 220b, 220c** and **220d.** (An undivided data object is considered to consist of exactly one embedded object). The member **105** (Figure 2) then associates specific access permission credentials **225** to the objects based upon a right to know security policy, using the CKM encryption and credentialing process described above (i.e., using a working key, etc.). The encrypted data object **220** is then transmitted and/or stored via a decentralized, public network **330,** just the same as if it were unencrypted. Every network user can conceivably reach the encrypted data object **220** over the public network **330,** but only those members having a proper set of credentials **115** (*i.e.,* belonging to a specific set of *Credential Categories)* are able to decrypt and view the informational content contained within the embedded objects of encrypted data object **220** and secured by the specific access permission credentials 225.

### 2. Further Details of the Encryption Process

### (a) The Working Key

One embodiment of the present invention utilizes a specialized function to generate the working key (defined above) called the *CKM Combiner* **232.** In this embodiment, the role of the CKM combiner **232** is to create a working key from the domain, maintenance, and pseudo-random values, as described above. The CKM combiner **232** can accomplish this task in a variety of ways. For example, six different methods are described in the public document, American National Standard for Financial Services, X9.69-1998, *Framework for Key Management Extensions,* American Bankers Association, 1998. In one embodiment of the present invention, the CKM combiner **232** is obtained as a stand-alone software package offered by TECSEC *(CKM,* Version 5.1). Thus, it is not necessary to know the specific details of how the combiner function works in order to implement the various embodiments of a PXa³ system.

As described above, the working key **200** is used to encrypt the actual data object **220.** In one set of embodiments of the present invention, the working key encryption process uses a standardized triple DES (3DES) algorithm, although other algorithms may be used-for example, Rejndael, the new Advanced Encryption. Standard (AES), or IDEA, or BEST, or SkipJack, or any number of other symmetric encryption algorithms. Preferably, the working key **200** is destroyed immediately after an object is encrypted. In CKM, information about the specific data required to reconstruct and apply the values, credentials, and other functions are include an encrypted header file **235** (associated with the encrypted data object), which any member 105 of the domain **100** can open. In one embodiment, the header **235** is itself encrypted with a header-encrypting key that is preferably managed through the same distribution scheme as the maintenance value and member credentials (*e.g*., distributed via a security profile **120** by a workgroup administrator **145** to individual member accounts **300** situated at the PXa³ web site **305).**

Read and write access to an encrypted data object **220,** as well as protection (through encryption) of the pseudo-random value **215** are preferably accomplished through an adapted Diffie-Hellman (asymmetric) process that creates pseudo-random value encryption keys (credential keys). A Diffie-Hellman static key pair is thus associated with each credential, and all the credentials are then used to generate a credential key using the Diffie-Hellman standard key generation algorithm, for encrypting and decrypting the pseudo random values. A member with an appropriate set of Diffie-Hellman public key-based credentials may encrypt data objects, and a member with the corresponding set of Diffie-Hellman private key-based credentials can decrypt those data objects. A member with both sets has both read and write access. This process results in other parameters that are also included in the member's security profile **120,** and an additional level of assurance within the CKM combiner functionality.

### (b) The CKM Header

Still referring to Figure 3, a header file, called the *CKM Header* **235** (Figure 3), is available to decrypt the encrypted data object **220** (and created during encryption). The CKM header contains, among other things, the encrypted pseudo-random value **215** used in constructing the working key **200.** In one embodiment, the CKM header is itself encrypted with a header key known to all members of a specific domain, so that the header file **235** for every encrypted data obj ect **220** may be read by all members of a workgroup belonging to that domain. Note that the pseudo-random value **215** is not available to those without the proper set of cryptographic read access permissions for *all* the credential categories originally used in encrypting the data object.

### (c) The Object-Within-An-Object Encryption Process

As described herein, data objects that are encrypted with the present method may be divided up into separate objects, enabling, for example, a portion of a data file or document to be encrypted within a main file, using a working key that is different from the working key used to encrypt the main file. Any method of portioning the data file may be used, for example, those described in U.S. Patent No. 5,680,452.

The methods of encrypting various selected portions ("embedded data objects") of a data file which are described in the above mentioned patent are well-suited to the present system, and hence are utilized in various embodiments of PXa³.

Using the preferred embodiments of PXa³, an encrypted data object can be as small as a single word within a file or a data field within a database view, query, or report. This *Object-Within-An-Object* feature places no constraints on an organization's ability to apply CKM technology to its natural information segmentation-either when the data is at rest in a network-connected information repository, or while it is being transported across the network by several transport mechanisms (each providing a secure "object wrapper" around the object being transported). This feature is significantly different from existing PKI security methods, in which encrypted data objects can typically be no smaller than an individual file or database view.

The object-within-an-object feature is convenient for several reasons:
(a) When different people need to be granted different access permissions to data objects within a document or database, each unique data group (e.g., sections within a business plan) can be designated as one data object, which is included within a higher-level data object (the business plan). In this case, lower level data objects may be arranged within a higher level data object in a parallel fashion;
(b) When different transport mechanisms are used to move a data object, each transport mechanism may "wrap" the data object it receives with its own set of credentials (e.g., a local police department message, encrypted under that department's domain, then wrapped by the FBI domain on the Internet, and traveling over a State Department network, which wraps it again with a State Department CKM credentialing and encrypting process);
(c) Alternatively, data objects may be organized in both hierarchical and parallel subdivisions, each architecture tracking the way in which an organization performs its mission. The object hierarchy can easily be adapted to fit almost any organization.

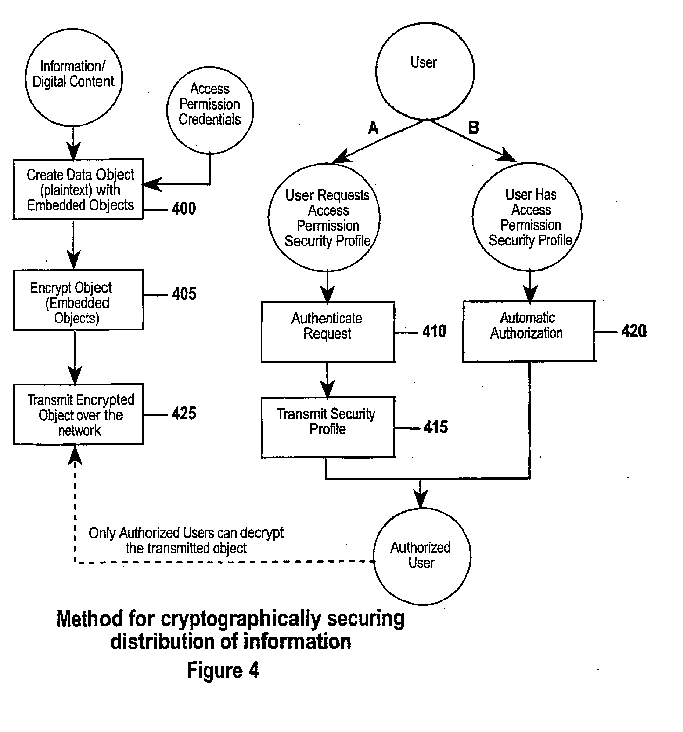

Thus, one embodiment of the present invention presents a method for cryptographically securing the distribution of information over a decentralized public network - such as the Internet - to a broad group of network users. In this embodiment, shown in the flowchart of **Figure 4**, the information to be distributed is contained within a data object having one or more embedded objects (a single embedded object may correspond to the entire data object, depending upon the specific application (step 400). The object's creator encrypts these embedded objects by creating a set of access permission credentials that are selectively assigned to various embedded objects of the data object (step 405); for example, encryption may be achieved using the CKM X9.69 ANSI standard.

Each access permission credential ensures that only authorized users (i.e., those users who are in possession of the specific set of credentials) are able to decrypt those selectively encrypted embedded objects of the data object, allowing the now encrypted data object to be transmitted over the network in a secure fashion. Here, a user may be authorized in one of two ways. Initially, the user must obtain a set of access permission credentials (Branch A). Upon receiving a request for an access permission credential set on behalf of a network user, the system authenticates the request (step 410), preferably using a password, biometric identification (further described below), hardware or software token. Other authentication methods could also include time and place (location). Once authenticated, a security profile containing access permission credentials is securely transmitted to the authorized network user over the public network, using any of a variety of known encryption methods (step 415). Alternatively, the user may already be in possession of a security profile in the form of a valid hardware or software token (Branch B). In this case, the user is automatically authorized to decrypt the encrypted data object upon request for access (step 420). According to this method, the encrypted data object may be transmitted over the public network without having to target individually identified users (step 425).

### (d) The Credentialing Process

The CKM X9.69 standard is used as an underlying encryption process in one embodiment of the present invention. The CKM X9.69 encryption standard is superior to other currently existing cryptosystems because it facilitates differentiated role-based access to large collections of digital information. The encryption process may be initiated at the time the data is entered into the system. For example, in a large reporting document (file) with many sections, each section, chapter, paragraph (or word) can be credentialed and encrypted differently from the others, according to the roles selected for read or read/write access.

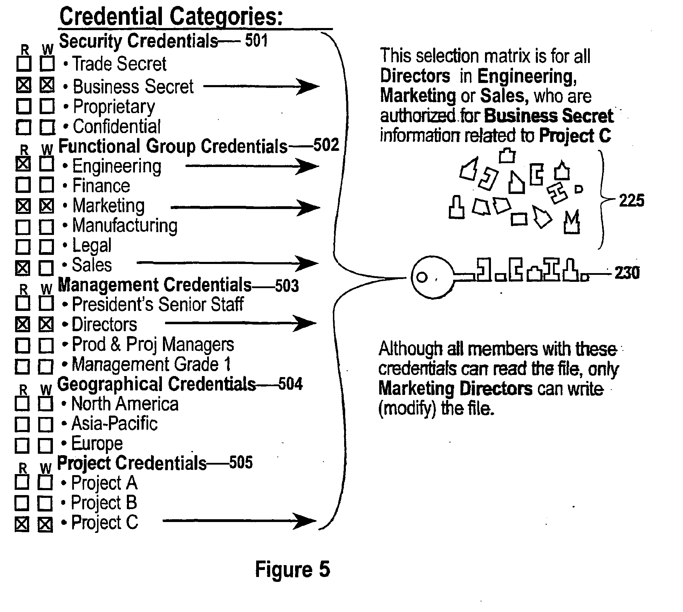

As mentioned above, in one embodiment of the present invention, credential categories (and the credentials within them) are defined by the domain authority **125** (Figure 2). **Figure 5** shows an exemplary set of credential categories **(501, 502, 503, 504, 505)** and the credentials within. In one embodiment, within any given set of credential choices, multiple credentials selected within a category are "ORed" together, while all category choices across multiple categories are "ANDed" together, to derive the single combined credential key **230** that is used to encrypt the pseudo-random value **215** (Figure 3). The Boolean ANDing and ORing processes of this embodiment include a cryptographic combining algorithm that takes a number of credentials and creates a single value, which is then used to encrypt or decrypt the pseudo-random value **215** using a public key encryption process.

As an illustration (and still referring to Figure 5), a credential key **230** may be formed by the following function: [Business Secret] AND [Engineering OR Marketing OR Sales] AND [Directors] AND [Project C], where "Business Secret", "Directors" and "Project C." define selected credential categories **501, 503,** and **505** respectively, and ''Engineering'', "Marketing", and "Sales" are specific alternative credentials within a single category, **502.** The Boolean function is used to define the access permission credentials **225** necessary to form the credential key **230.** All credential categories included at the encryption of the information must be represented in the security profile **120** (Figure 2) of anyone wishing to access that information (via decryption). If only one required credential category is not represented, the unencrypted (plaintext) object will be inaccessible.

In one embodiment, a member's credentials **115** (Figure 3) maybe kept at the PXa³ web site 305 (Figure 2) and working keys **200** (Figure 3) may be generated at the web site 305 and securely transmitted to the member's client system (e.g., personal computer, cellular phone or wireless personal digital assistant), thereby reducing the size of the client "footprint" at the member's device and providing enhanced security, since the credentials **115** would never need to be transmitted to member systems.

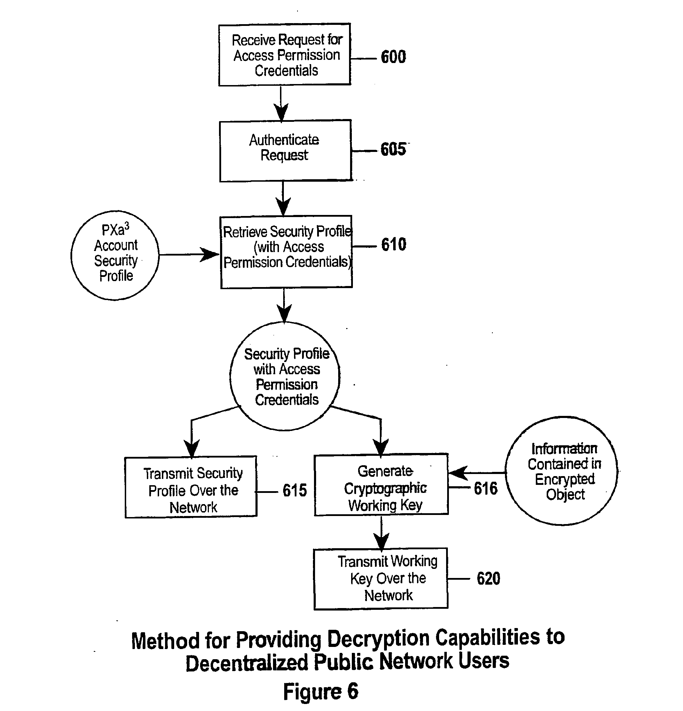

Thus, one embodiment of the present invention presents a method for providing decryption capabilities to a plurality of network users over a decentralized public network. In this embodiment, shown in **Figure 6,** the system: (a) receives a request for access permission credentials on behalf of a network user (step **600**); (b) authenticates the request (step **605**); (c) retrieves a security profile from a PXa³ member account (step **610**); and either (d) securely transmits the security profile (which includes the access permission credentials) to the network user over the decentralized public network (step **615**), or (e) generates a working key using information contained within the security profile, along with information contained within the encrypted data file (step **616**), and then securely transmits the working key over the public network (step 620). One of ordinary skill in the art will recognize, in light of the extensive description above, that the ordering of steps may be interchanged and modified. The method may further include the use of biometric identification (described below), hardware or software tokens, or time or location-based authenticating information.

### C. The Access Management Features of PXa³

The CKM encryption process described above provides only one component of the access control and management features of PXa³. Because CKM is conceived and designed to use single-threaded, stand-alone computer systems for members and administrators, existing cryptosystems using the CKM X9.69 standard are not designed to take advantage of the accessibility, scalability and versatility of public networks, such as the Internet, to enable the distribution, administration, maintenance and use of member profiles. PXa³ is therefore a vast improvement over existing CKM systems, providing secure methods for creating, administering, requesting and distributing member profiles by and for individual users of the system over a decentralized public network, so that users (both administrators and members) may access and use the system from just about anywhere in the world. Since PXa³ operates over a public network, its access management features provide improved methods of authenticating users, thereby avoiding fraudulent or unauthorized access to the data and information that is to be secured.

Thus, PXa³ additionally contemplates a broader key management strategy to include a configurable identification and authentication capability along with a third party PKI trust authentication capability. (One of ordinary skill in the art will recognize that the essential part of PKI is a certificate that includes a verifiable digital signature, which is itself a mathematical hash of information that is then encrypted through an asymmetric (public key) process.) In one embodiment of the present invention, as illustrated in Figure 2, PKI authentication support is managed through either a smart card or a downloadable soft token, using PKI certificates **109** issued by a centralized Certificate Authority (CA) server **110.**

In addition, credentials **115** may be associated with an application that defines one or more identity elements for a member **105,** such as a biometric function, a smart card identity, a PIN/Password, or time and/or location parameters. Identity elements, in the form of an *Identification and Authentication* (I&A) data object, are then bound to a primary encrypted data object through the underlying encryption process described above. In one embodiment of PXa³, the I&A data object includes a PKI function that can authenticate a member to other members. The I&A data object may also include other functions that must be stored secretly and which are included in the member's security profile **120.**

Identification is the process of identifying a member. Authentication is the process of validating that identity. Still referring back to Figure 2, in one set of embodiments of the present invention, member accounts **300** include a *Member Authentication* element **155,** and security profiles **120** are protected with an identity process: a member **105** must provide proof of identity before he or she can access his or her security profile **120.**

In one set of embodiments (represented by Figure 2), basic member authentication **155** is provided via a user password **156.** Additional authentication modes are provided via time and/or location **157,** a smart card token **158** and/or a biometric scan (template) **159.** In the case of a smart card-based system, the user inserts a smart card token into areader and enters a password (PIN) when prompted.

Biometric authentication (further described below) depends upon the type of sensor employed. For example, with BioID™ from DCS, a video camera and microphone are used to measure static facial contours, voice recognition, and lip movement while speaking a passphrase. Other biometric technologies rely on live scanning of fingers for fingerprint verification. Authentication occurs when the biometric template **159** (Figure 2) (a "shorthand" summary of the scanned data) is presented to a PXa³ server for matching to the template that was recorded when the user initially registered *(a.k.a.,* "enrolled") with the workgroup administrator.

As described above, in one embodiment of the present invention, a workgroup administrator **145** creates each member's security profile **120**. Among the data included in each security profile **120** is the member's identification (user ID). Preferably, a member **105** may not change the user ID supplied by the workgroup administrator **145.** In one set of embodiments, each time a data object **220** (Figure 3) is encrypted, the user ID of the member who encrypted the data object (the "creator") is placed in the data object's header file **235** (Figure 3), so that each member having access to the data object **220** may also verify the identity of the creator. Trust is assumed since only a workgroup administrator **145** may issue security profiles **120,** and only a workgroup administrator may designate user IDs.

### 1. Biometric Authentication

Referring back to Figure 2, in one embodiment of the present invention, the security process for a PXa³ member **105** is to use his or her PXa³ member client system **850** to request a download of his or her member security profile **120** from the PXa³ web site **305.** Preferably, each time a member logs on and opens a session, he or she will need to authenticate him or herself. Upon successful authentication, the member's soft token-resident profile will be downloaded to the member's client system for subsequent use in encrypting and decrypting data objects.

There are a number ofbiometric authentication technologies available today. As mentioned above, a new technology called BioID™ is now available that recognizes people through face, voice, and lip movement using a PC-based camera and microphone. The details of using this technology and how to acquire it is described on the BioID™ web site at *www.bioid.com.* To authenticate themselves, users look at a camera and speak a pre-registered "pass-phrase" detected by a microphone. Three modes ofbiometric recognition are possible: a static picture of the person's face is taken and processed to recognize facial characteristics, relative to a pre-registered template of the person's face taken during enrollment. In like fashion, the person's voice speaking the pass-phrase is also transformed into a template and compared to the enrollment template, as are the lip movements speaking the pass-phrase (which are as unique as a fingerprint).

BioID™ technology thus provides three modes of recognition: Face, voice and lip movement. This technology allows customers to select combinations from three different modes ofbiometric authentication. One mode (e.g., voice recognition only) may be used for most applications, because almost every computer system possesses a microphone. Two modes may be used for higher assurance applications and for situations where one of the modes is not operating properly due to a change in facial or voice characteristics. However, a video camera peripheral is required. All three can be required for the highest assurance applications.

A PXa³ system may provide a simple form of "one factor" authentication/security using a user ID and a password, while in a more sophisticated aspect, "two-factor" authentication/security may use a password and an easy. biometric authentication process, such as voice recognition, or a hardware (hard) token.

### 2. Revocation of Member Access Permissions

Any cryptosystem must have the means to revoke a member's access permissions. Revocation refers to preventing access to material encrypted subsequent to revocation. It does not refer to preventing access to material that has been encrypted during a member's period of legitimate access. Once the decision to revoke is made, new encryption access denial should be as complete and rapid as security risks warrant A PXa³ system preferably provides multiple means to revoke a member's access permissions. Three PXa³ revocation methods of the preferred embodiments are listed below:
(a) Profile expiration limits provide a routine, periodic method of removing member access, just as a credit card might expire. As security profiles **120** expire, they may simply not be renewed.
(b) Updated maintenance values eliminate access to those members not in possession of the updated value. New maintenance values can have backward utility, so that material that has been encrypted with a previous maintenance value may be decrypted with a subsequently issued one. The domain authority **125** may choose to issue a new maintenance value to some members, and not give it to certain other members, thereby revoking their access to future information.
(c) A member's security profile **120** may be turned off or modified at the PXa³ web site 305 by an administrator **(125,125** and/or **145),** such that the next time that member logs in, his or her ability to use the system may be constrained or terminated.

Thus, in a PXa³ system, security profiles **120** can be cancelled or changed at any time with virtually immediate effect, depending upon the expiration time limits set into an individual member's security profile. Furthermore, as members **105** connect to the PXa³ web site **305** to use their security profiles **120** to access old content or create new content, their credentials **115** can be changed from the last access. This facility is particularly useful in responding to-or in preventing-certain security attacks by outsiders and/or former members, since all a workgroup administrator **145** must do to forestall such attacks is cancel a rogue member's security profile. This is a more difficult problem for smart card-based systems without PXa³, since a rogue member could conceivably continue accessing encrypted data up until the security profile on the card finally times out.

To embody the above-described capabilities of the PXa³system, one exemplary configuration is further detailed below in section E.

### D. PXa³ System Application Examples

### 1. Content Vending

As the Internet and the mobile phone technologies begin to morph together into the mobile Internet, a number of new applications are exploding into the market. Many of these requiring one-to-many distribution security have to do with vending content-music, video, and information on a wide spectrum of interests-to multiple communities of consumers. Although there are many different types of content and many different communities of consumers, one example should serve to illustrate the concept: music clubs.

Consider a media giant in the entertainment business with the following opportunity: it wants to offer a number of digital information subscription services to millions of consumer customers in a modem version of a music club. A consumer would sign up to become a member 105 of, for example, the classical music section of the music club, and would pay a monthly fee for the, e.g., "Classical Gold Membership". This would entitle that consumer-member to stream a digital music track from an Intemet-based gold classical library over a wireless web system any time he wants to play it for his listening pleasure. Referring back to Figure 2, this consumer-member **105** would have a PXa³ member account **300** and appropriate credentials **115** for his section of the club (domain **10**0), along with downloaded PXa³ member client application software 850 for his "player devices." The music would be encrypted with the appropriate credentials. Thus, he could listen to any of the club's "classical gold" library anytime he wanted, but could record none of it.

Another model would allow him to download any music track he wanted for storage in his personal computer and replay it as many times as he wants, but he would be charged a fee (e.g., $1.00) for each track. In this model, the downloading device (personal computer) preferably has a large memory and a serial bus connection (*e.g*., a Universal Serial Bus cable), for downloading tracks into portable devices (*e.g*., a portable digital player) to and from the personal computer.

In the above examples, the content vendor distributes music (*i.e*., data files **220**, Figure 3) to paid subscribers (*i.e*., members **105**, Figure 2). There are many other types of content, however, that can be sold with this same type of PXa³ security service to wired and wireless web consumer groups. Another example is location-specific information, such as traffic, weather, and food and lodging information for a geographic area surrounding a user's current geographical position. Or, as another example, user-customizable information could be sold which facilitates business or leisure pursuits, such as river conditions for fly fishing or streaming play-by-play radio coverage for the Oakland A's baseball games. A list of general subscription categories, though not exhaustive by any means, might include:
General News
Special interest news (e.g., fly fishing)
Sports (news and play-by-play coverage)
Financial news & services
Location-specific traffic, weather, and traveler info
Directory listings
Mobile entertainment (music, video games, video, lotteries/gaming,)
Mobile ticketing
Mobile medical records
Field force automation
Mobile supply chain management

The content vending application of PXa³ is different from customary PXa³ corporate information management applications, in that it is designed to be more restrictive in the manner in which the content is distributed. For example:
(a) members 105 typically only decrypt content **220** they retrieve from a web site 305 or are sent via email;
(b) members 105 typically are unaware of the underlying PXa³ technology, perceiving only that when they download a piece of content, they need simply click on a command or a file icon and the file becomes available in the normal plaintext (unencrypted) manner;
(c) such content vending systems typically would not use PKI, because digital signatures are not required.

Thus, the present system provides a method and apparatus for distributing digital content over a decentralized public network, such as the Internet, to individual network users who subscribe to a content vendor service.

### 2. Controlling Access To A Secured System

The basic structure of a PXa³ system is well suited towards applications, such as the content vending application described above, in which the object to be secured is a computer-representable data object. However, this need not always be the case. A further embodiment of the present invention provides a method and apparatus for access to any secured system for example, a physical system (such as an office complex), or a logical system (such as a computer network); the system to be secured may also be either static or dynamic.

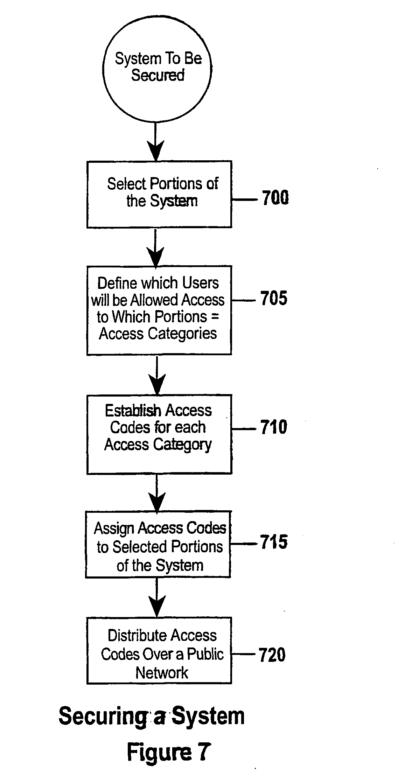

Such an embodiment, shown in **Figure 7,** utilizes the same underlying encryption features of the previously described embodiments. Portions of the system to be secured are selected (step 700). The system also utilizes one or more categories of system users, thereby defining which users are to be allowed access to which secured portions of the system (step 705). An access code must also be established for each category (step **710).** The access codes are then systematically assigned to the various secured portions of the system (step 715), where each access code is adapted to be combined with other components to create a key for controlling access to the selected portions of the system.

The access codes themselves are secured within the system, preferably using biometric identification, but may additionally (or alternatively) be secured through a variety of soft-token and/or hard-token (e.g., smart card) means, with or without the use of a user password/PIN, time or user location. The system then distributes the secured access codes over a decentralized public network to users of the system who are to be allowed access to at least one of the selected portions of the system (step **720**). Again, the order in which any of these steps occur is not important, and may be modified. For example, the access categories may be established and users therein defined prior to selecting portions of the system.

### E. PXa³ Architectural Considerations For Web-Based Security Management Applications

Implementing the above-described embodiments of the present invention, a preferred PXa³ system design is based on a client-server architecture networked across the Internet using HTTPS to support both browser-connected administration (for the domain and workgroup administrators) and local client applications (for each member, as well as for the administrators).

### 1. System Configuration and Higher Level Design

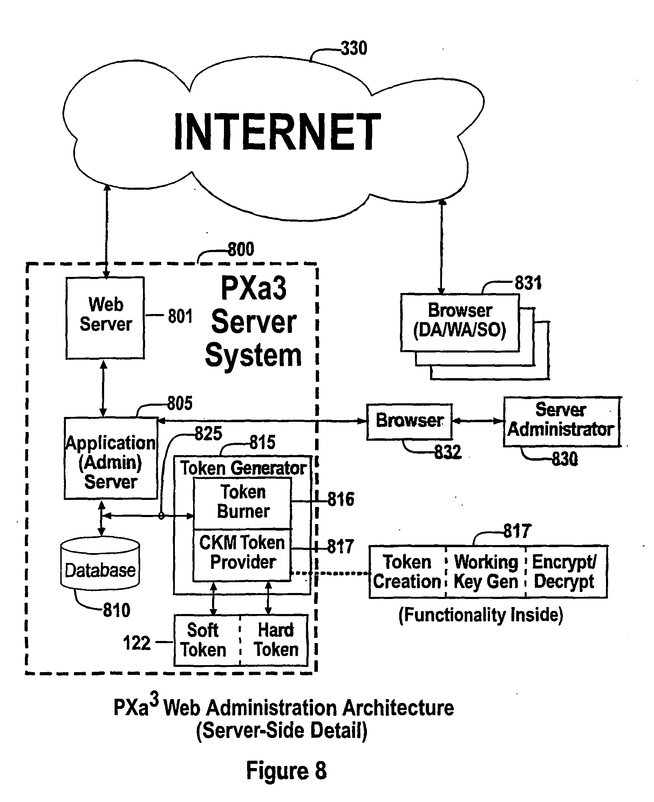

**Figure 8** shows the preferred model architecture for a PXa³ server system **800** operating a PXa³ web site 305 (Figure 2) and adaptable to all of the above-described embodiments of the present invention. The server system **800** comprises at least one PXa³ web server **801,** an application server **805,** at least one database server **810,** and a token generator 815. The web server **801,** application server **805,** and token generator **815** may be, for example, MS Win2000 Servers, which may be implemented on a single server computer, but is optimally implemented over a collection of servers. The database server(s) **810** may be, for example, Win2000 Advanced Server(s). The database server(s) **810** is (are) preferably configured in an MS Cluster Server environment. In the preferred embodiments, operating system functionality for all servers is reduced to a minimum; for example, all unnecessary components such as IIS (since WebLogic Port 443 for SSL is used), telnet, and ftp may be removed.

Preferably, a PXa³ server system **800** utilizes a multi-tiered application server implementation (further elaborated below). In the preferred embodiments, this implementation is founded on Java technologies (BEA WebLogic™ 6.0 Server, J2EE-compliant) running under the MS Windows 2000 operating system. The server database **810** is deployed, for example, on Oracle 8.7 and is preferably accessed through Java Database Connectivity. These operating systems and applications software are only examples, and are by no means required in order to implement the present invention.

As shown in Figure 8, a server (system) administrator **830** preferably maintains the PXa³ system server(s) **800** by performing a set of maintenance tasks **311** (Figure 2). In this embodiment, a PXa³ server system **800** includes a web server browser interface for allowing PXa³ domain administrators *(i.e.,* security officer **126** (Figure 2), the domain authority **125** (Figure 2) and workgroup administrators **145** (Figure 2)) to perform their functions via a commercial web browser **831.** Via this web browser **831,** PXa³ server system **800** allows user credentials **115** (Figure 2) to be created and stored as part of a security profile **120** (Figure 2) and member token **122** by the domain authority **125** (Figure 2) and/or workgroup administrators **145** (Figure 2) via the decentralized public network of the Internet **330,** from anywhere in the world. Server administrators **830** also perform their system maintenance tasks **311** (Figure 2) via a commercial web browser **832.**

Still referring to Figure 8, the PXa³ server system **800** further includes an Internet accessible token interface **825** for retrieval of member tokens **122** from the database **810.** In the preferred embodiments, member tokens **122** are retrieved from the secure central storage of database **810** to users' local systems (either administrator or member) via a secure delivery channel using SSL/HTTPS protocol.

The security profiles **120** (Figure 2) and related member tokens **122** are stored in a secure central server database **810** and are only accessible by users with proper member anthentication. Once in.the secure storage, the member tokens **122** are accessed under two exemplary conditions:
*(a) When the member associated with a particular security profile requests a member token.* In this case, the member token is delivered to the member's client system via a secure delivery channel. The member gains access to the member token only after he goes through an authentication procedure as mandated by the security policy set by the domain authority.
*(b) When a domain authority or workgroup administrator modifies a member's security profile.* In this case, an administrator will retrieve a security profile/member token from the secure storage **810,** modify the security profile/member token as required (*e.g.*, pursuant to a change in credentials), and return the security profile/member token to the secure storage. Alternatively, a new security profile/member token may be created to replace the old one in the secure storage. In the preferred embodiments, although an administrator has access to member security profiles, he does not necessarily have access to all the information contained within the security profile, since some fields in the member token are encrypted and only accessible by the member associated with that member token.

### (a) PXa³Application Server Modules

In the preferred embodiments, the PXa³ application server 805 is partitioned into two types of modules: basic functional modules and the auxiliary functional modules. The basic functional modules are modules responsible for the automatic token generation and retrieval features described above; the auxiliary modules provide further functionality that is assistant to the basic functionality and/or configurable by the PXa³ security officer **126** (Figure 2) (e.g., setting security policy or billing requirements). The auxiliary modules are non-interactive and therefore transparent to the system users.

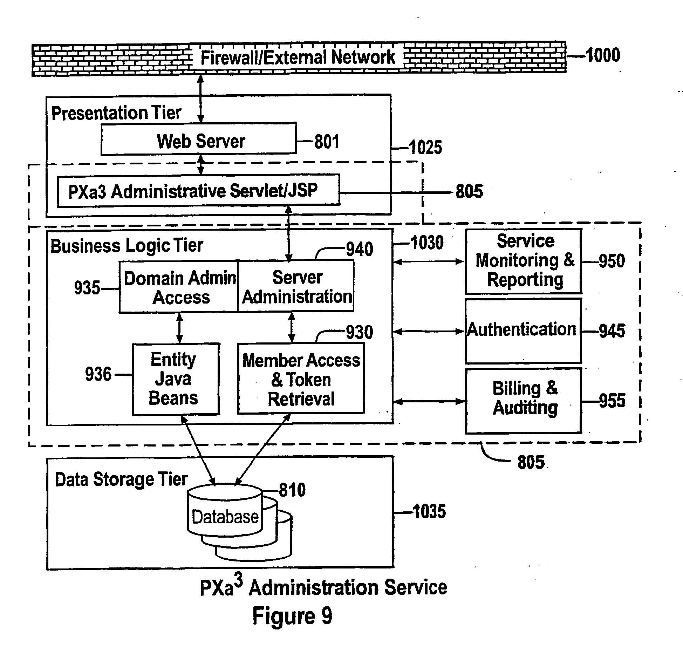

As shown in **Figure 9,** the basic modules in the PXa³ application server **805** include: (a) a member access and token retrieval module 930; (b) a domain administration access module **935**; and (c) a server administration module **940**.

All communications between the different modules, should they happen over a public network, must be secured, regardless of whether they take place over the Internet or inside an intranet. For example, domain access control information must be included in information passed over module boundaries, so that each module does not have to independently verify domain information. Hence, the preferred embodiments use SSL (TLS) for securing such intermodule communication purposes. If SSL/TLS is not possible for any reason, a customized encryption scheme must be developed. Other protocols may be used in the future if a better solution becomes available or presents a more optimal alternative.

In addition, to ensure maximum security, domain separation needs to be implemented within modules, as well as for communications among modules. In the extreme case, it may be necessary to have different web applications for the access modules of individual domains (alternatively, it may be sufficient to implement domain access control using an Access Control List ("ACL").

Among the three basic modules **(930**, **935**, and **940),** the first two actively interact with a client system-a communication protocol is therefore needed for each of these two modules. The third module-the server administration module **940**-is used for PXa³ server setup, configuration and troubleshooting purposes. This module **940** may include a web-accessible server administration interface, or alternatively, server administration tasks **311** (Figure 2) can be executed on an administrator's local client system using scripts.

### (1) The Basic Functional Modules

*(a) Member Access and Token Retrieval Module.* This module **930** handles member access and token retrieval requests. Member access to the database **810** occurs through a specially designed client system architecture, further elaborated below. In the preferred embodiments, the underlying protocol for member token retrieval is HTTPS, which ensures a seamless penetration of firewalls and proxy servers on the PXa³ system's client side (both administrators and members).

In the preferred embodiments, the member access and token retrieval module **930** performs the following functions:
1) receives client login and token-retrieval requests;
2) checks and verifies domain information, if multiple domains are supported;
3) checks the authentication specification for individual users, and if more information is needed, asks the client to supplement;
4) conveys client requests to the authentication module (further described below);
5) verifies the return from the authentication module;
6) if authentication is successful, retrieves the requested member token **122** (Figure 8) from the secure database storage **810,** and returns the member token to the requesting client using a secure delivery channel, using, *e.g*., SSL/HTTPS;
7) if authentication fails, returns a generic failure message to the requesting client (to minimize information a hacker might receive during a hacking mission, a non-differentiating failure message is preferred for all authentication failures regardless of the cause); and
8) requests the monitoring/reporting/logging service module to log all meaningful events for billing, auditing, access control, and system monitoring use.

It should be emphasized that this list of functional requirements is not meant to be either mandatory or complete; the list is meant simply to exemplify the basic functional requirements of the member access and token retrieval module.

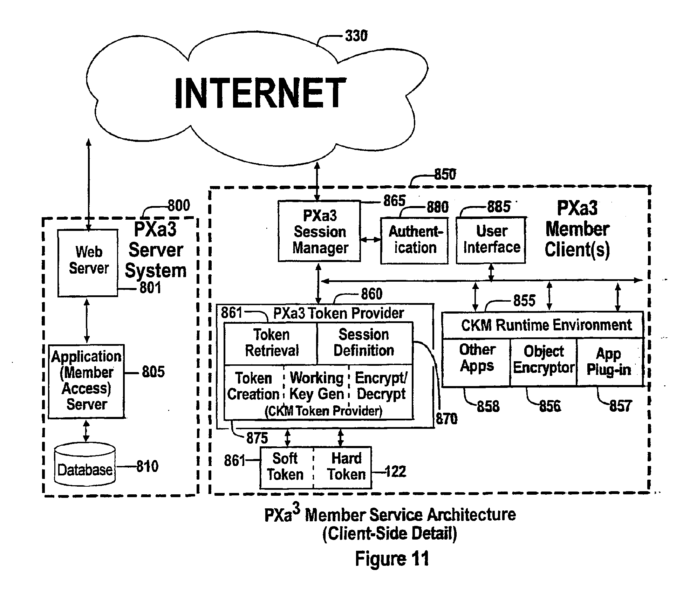

Also in the preferred embodiments, member access and token retrieval is handled in a stateless manner. In other words, the PXa³ application server **805** does not keep any client states when a member **105** (Figure 2) requests a member token **122** (on the other hand, the PXa³ member client **850** [Figures 2 and 11] might decide to keep a state for its own use, but that state need not be conveyed to the PXa³ server in any way).

A stateless procedure for the member access and token retrieval module **930** has at least two benefits. First, a stateless procedure is more efficient and scalable. The entire session of an individual member's access and token retrieval may require no more than two rounds of exchange between the PXa³ member client **850** (Figures 2 and 11) and the PXa³ server system **800** (Figure 8), including the initial authentication round, but there may be a significant number of concurrent member accesses to a single PXa³ server (this is in contrast to the case of administrator access, which requires a significant number of rounds of exchange between the administrator's client system and the server system in a single session, but normally does not have a large number of concurrent administrator accesses, even when a single server serves multiple domains). By using a stateless procedure to the member access and token retrieval module, the PXa³ server system **800** (Figure 8) is relieved from the burden of keeping states for each PXa³ member client **850** (Figures 2 and 11). In particular, when using a J2EE architecture, stateless session beans have much better performance and scalability than their stateful counterparts, since all instances of a stateless session bean are identical and can be pooled.

The second benefit of using a stateless approach for the member access and token retrieval module derives from the fact that the code logic for both the client side and server side is simpler. This is especially true for the server side code, since the stateless approach can follow a pure client-server model-the information that is contained in each client request is sufficient for the server to process that request and to make a response. On the client code side, the client-server communications will still follow the HTTPS protocol, but because no states are maintained, no session tracking mechanism need be implemented in the code.

Error checking and exception handling are important aspects of this module. Preferably, a reasonable timeout mechanism is also included, so that if no response from a particular server is received (*e.g*., from database storage **810)** within a fixed period of time, the requesting client system is notified with an appropriate message. The timeout mechanism is preferably a two-stage process: after the first few timeouts, the server retries to fulfill the client requests and sends a status message to the client; after a preset number of timeouts has been reached, an error message is sent.

In the preferred embodiments, the member access and token retrieval module **930** communicates with PXa³ member clients **850** (Figures 2 and 11) following a member access protocol based on HTTPS. As a result, the natural choice of implementation framework for the communication interface is either HTTP servlets or JSP pages. The member access and token retrieval module **930** works seamlessly with the PXa³ member client application (Figures 2 and 11) installed on the user's client device (e.g. desktop, laptop, mobile phone, wireless personal digital assistant, etc.). The system can be easily supported and upgraded. In particular, should any upgrade of the PXa³ application server **805** take place, the new server is still able to communicate with the earlier versions of the PXa³ member clients. The client-server communication protocol therefore includes a version negotiation mechanism, such that backward compatibility can be maintained. When dramatic protocol changes occur and client/server compatibility is no longer possible, the application server notifies the client system of the status, and the client system then prompts the user with enough information to update his client. It is therefore important that the communication protocol be defined in such a way that it is extensible, so that if in the future more functionality is required of this module, the protocol can be extended without affecting backward compatibility.

*(b) The Domain Administration Access Module.* This module **935** handles domain authority and workgroup administrator access and administration requests. In the preferred embodiments, the domain administration ("DA") access module **935** uses a web browser to provide communication between the administrators **(125, 126,** and **140,** Figure 2) and the PXa³ server system **800** (Figure 8) to perform various domain and workgroup administration tasks. In the preferred embodiments, both Microsoft Internet Explorer and Netscape Navigator are supported. Preferably, the DA access module performs the following functions:
1) receives client login requests;
2) checks and verifies domain information, if multiple domains are supported;
3) checks authentication specification for individual domain authorities and, if more information is needed, asks the client system to supplement;
4) conveys client requests to the authentication module;
5) verifies the return from the authentication module;
6) if authentication is successful sets up a session and directs the user to a default page, where he can start administration tasks;
7) for any subsequent requests, calls the authentication module to verify the authenticity of the requests (details of how the authentication check is accomplished for subsequent requests after a domain authority has logged in are further described below);
8) checks the state of a request in relation to the previous state, thereby developing a state machine for the domain authority access session, providing enhanced security;
9) if necessary, updates database (all administration functions are preferably transaction based using, for example, a technology called Java Transaction Service ("JTS"), which provides a transaction management service to J2EE applications);
10) if necessary, sends a token creation request to the token generator **815** (Figure 8) or updates the token creation queue (described in further detail below);
11) performs transaction management, both within an Entity Java Bean ("EJB") framework **936** (Figure 9)and in relation to session tracking and state management;
12) if authentication fails, returns a generic failure message to the client system (to minimize information a hacker might receive during a hacking mission; a non-differentiating failure message is preferred for all authentication failures, regardless of the cause);
13) requests the monitoring/reporting/logging service module to log all meaningful events for billing, access control, and system monitoring use;
14) terminates the session upon request from a domain administrator, or if the session has timed-out; and
15) if a domain administrator of the same domain is already logged on, and only if the authentication check succeeds, prompts the user with a message telling him that another domain administrator is presently logged on.

As with the member access and token retrieval module 930, all client-server communications for this module are SSL (HTTPS) based to ensure security.

In general, domain administrators' security officer, (domain authority, and workgroup administrator) duties are to maintain domain security policy, maintain member data (including member roles and access permission credentials) and to create member tokens.

In the preferred embodiments, token creation is a batch process, which enhances the scalability of the PXa³ system. As shown in Figure 8, token generation is preferably accomplished by a token generator **815,** separate and apart from the PXa³ application server **805.** The token generator **815** is itself partitioned into two modules: a token burner **816** and a CKM token provider **817.** In the preferred embodiments, the token provider is included in a commercially available product called CKM Version 5.1, offered by TECSEC. As described in further detail below, using the TECSEC CKM product for the CKM token provider **817,** a member token file-including member account information, which is specific to the particular implementation of the system and contains the member's security profile-is encrypted, hashed and then stored and/or transmitted upon request by the user.

By separating the DA access module **935** (Figure 9) from the token generator **815** (Figure 8), data access via the DA access module is transaction based, and multiple concurrent accesses to the DA access module are allowed. Alternatively, the DA access module **935** and token generator **815** can be combined into a single module. By making the data accesses transaction based, domain authorities and workgroup administrators may access the database **810** concurrently with member accesses.

Unlike the member access and token retrieval module, one embodiment of the PXa³ server keeps a state for each domain administrator access session (i.e., implements a "stateful" procedure for each access session). One reason for this difference arises from the fact that (a) a domain administrator access session may require multiple rounds of client-server exchange; and (b) the number of concurrent accesses is relatively small, even in the case of a single server serving multiple domains. Here, a stateful approach has the following advantages:
1. Because of the relatively small number of concurrent domain administrator access sessions, the relief of the PXa³ server (and the client, which in this case is a web browser) from authenticating the client at each round may actually out-weigh the penalty of maintaining states for domain authority/workgroup accesses. In other words, in contrast to the member access and token retrieval module, a stateful approach may actually enhance performance and scalability.
2. Since a state is kept on the server for each domain authority/workgroup access session, once a client is authenticated, it no longer needs to be authenticated on each subsequent request. Since authentication is done only once per login session, it is feasible to make the authentication process a more complex and more secure one than a stateless procedure would allow.
3. In addition, by keeping a state of each domain anthority/workgroup administrator access session, it is possible to develop a mechanism of access control based on the access session states, therefore enhancing the security of the PXa³ server system. Since domain authorities have greater access privileges on the PXa³ server than do individual members, more security, even at a small expense of performance, is always desirable.

The DA access module **935** should be linearly scalable and efficient By separating this module **935** from the token provider module 817 Figure 8; (further described below) and consequently making token creation requests asynchronous, an acceptable degree of scalability is achieved.

For the PXa³ server system **800**, the DA access module **935** poses a usability challenge compared to the member access and token retrieval module **930**. As mentioned above, the DA access module provides a dynamic, web page-based interface for facilitating administrative tasks. All established web design guidelines should therefore be followed to enhance usability. Among other things, the user interface for the DA access module should provide a sense of user friendliness, security and professionalism.

*(c) Server Administration Module.* This module **940** handles server administration requests. PXa³ server administration is not to be confused with domain administration. A server administrator **830** (Figure 8) is responsible for the configuration, maintenance, and policy settings of the entire PXa³ server system **800**, which may host multiple CKM domains. A domain administrator **125,126** or **140** (Figure 2), on the other hand, is responsible for tasks such as policy settings and membership maintenance of the particular domain for which he is responsible. In the preferred embodiments, there is one PXa³ server administrator, regardless of the number of CKM domains on the server system.

On the other hand, PXa³ server administration is not to be confused with UNIX administration or network administration, either. Instead, it is confined to the tasks that are specific to a PXa³ system. In a sense, PXa³ server administration is a type of application layer administration-its purpose is to configure the specially-developed PXa³ applications which run on the PXa³ web servers, application servers and so on. The server administration module **940** (Figure 9) thus provides the following functions:
1) creates, deletes, disables, and re-enables CKM domains;
2) provides inter-server-addressing configuration functions (when a PXa³ server [a web server, application server, a database server or token generation server] is brought up or taken down, it is likely that low-level administration is called for, however, it is also likely that some kind of application-level configuration needs to be done. A server administrator **830** can use the server administration interface to make configuration changes at the application level. For example, a JDBC driver may need to be changed if the database server is changed);
3) provides database maintenance functions (some of these functions may be related to billing and auditing, yet some others may be simple database configuration functions);
4) provides server security policy setting functions (e.g., when a data center hosts multiple CKM domains, the relationship among these domains preferably should be set by the server administrator **830**);
5) provides a diagnostic interface, which the server administrator **830** can use to diagnose problems with the system, should something go wrong with any of the PXa³ servers (this functional requirement is closely related to a reporting and monitoring service [further described below]; in a sense, reporting/monitoring service is the dynamic side of a problem, and server administration is the static side of the same problem);
6) provides an interface for the server administrator **830** to check statistical data, such as server usage (this information falls into two categories: (1) current server usage information, such as number of active sessions; and (2) historic server usage information); and
7) sets up static load balancing (with extremely high volume member accesses, load balancing may need to be implemented in a hierarchical manner: at the top level, a static load balancing may be performed [static load balancing typically involves a simple request-dispatching algorithm, and is closely related to the partition of databases]).

The above list is exemplary, and is not intended to represent either a mandatory or complete list of functions for the server administration module. In one embodiment, the server administration module **940** is web-based, although there is no requirement of web accessibility for this module.

As with the DA access module **935,** the server administration module **940** is also designed, in one embodiment, to be stateful, for the same reasons as stated above.

Whether server administration is allowed to occur remotely or is restricted to local or LAN access is mainly a policy issue. Still, there are design considerations that need to be made. One possibility is for the server administration module **940** to listen to a different firewall port than 80 and 443. This port should be configured accessible only from certain machines within the LAN or as permitted by site security policy.

One of ordinary skill in the art will recognize that, depending on the operating systems, web servers, database servers, and application servers involved, the procedure of server administration tasks may be performed differently. Since a server administrator has the privileges to change server configuration parameters and therefore has the potential to damage the system, reliability is a great concern. For this reason, special attention should be paid to the design and development of this module. In addition, it is recommended that this module be implemented in a transaction-based manner. An action requested by the server administrator is either successful or has failed. Should an action fail, the server configuration should stay the same as if the action was never requested. Furthermore, it is desirable that the system remembers the last "good" configuration, so that the system can be restored to a working configuration, should the server administrator inadvertently change crucial configuration parameters and render the system nonfunctional. Preferably, the user interface should be designed with accident prevention in mind. For most user actions, confirmation should be required. The layout of the user interface should also be intuitive, to reduce the risk of mistakes. User inputs should be format-checked and the user prompted if any format error is found.

### (2) The Auxiliary Modules

Also shown in **Figure 9,** auxiliary modules for a PXa³ server system include: (a) an authentication module **945;** (b) a monitoring/reporting/logging service module **950**; and (c) a billing/auditing service module 955. As discussed above, these modules provide assistant functionality to the PXa³ application server 805. These three modules are exemplary, not mandatory. Each auxiliary module's functional requirements depend upon the commercial requirements of each implementation of the system.

*(a) Authentication Module.* In the preferred embodiments of the present invention, this module **945** checks and verifies the authenticity of the requests from clients, both domain authority/workgroup administrator clients and member clients. The authentication module 945 provides the following functions:
1) accept authentication requests from other modules with user information and authentication data;
2) access the database server **810** for an authentication template stored therein, according to an authentication requirement that has been set up by a domain authority/workgroup administrator or server administrator;
3) verify user authenticity and return a Boolean result to the calling module accordingly;
4) if a biometric authentication service from third party is used (or a time or location-based or hard token-based authentication mechanism), convey the authentication requests to the appropriate authentication service, receive the result from the service, and return the result to the calling module;
5) for a subsequent request in a stateful session, check session validity and user authenticity with a customized authentication mechanism, and return the result to the calling module accordingly; and
6) process user logout requests in a stateful session.

In one embodiment of the present invention, the above list describes features that are mandatory for the authentication module **945**; a complete list of features, however, will depend upon the specific implementation.

Authenticity checks are involved in the following two exemplary cases. First, an authenticity check is conducted when a request for a member token contains authentication data for initial verification. This case can be further divided into two sub cases: the first is the stateless scenario, as in the case of member access, when every request contains authentication data; the second is the case of an *initial login* of stateful access, such as domain authority access. What information is included depends upon the specific implementation and the security policy in place for that implementation. In most cases, at least domain information, user ID and PIN are involved. The design of this module, however should remain extensible, to accommodate expanded methods of authentication, such as biometric identification.

The second case in which an authenticity check may be conducted occurs when a request for a member token comes as a *subsequent request* for a stateful session, such as domain authority access or server administration access. In this case, it is likely that no authentication data is conveyed in the request. Consequently, the authenticity of the request is verified with session checking and a customized authentication mechanism, such as cookies, servlet sessions, etc.

It is important to note that the security of one-way SSL (HTTPS) is important for the purpose of preventing eavesdropping and server authentication, not for the purpose of preventing client masquerading. A certificate authority (CA) function may further be used to allow two-way SSL authentication.

In the preferred embodiments, to ensure maximum security, the authentication module **945** physically resides on the same machine as the modules for member access and token retrieval **930,** DA access **935,** and server administration access **940.** Although one embodiment of the PXa³ server system **800** (Figure 8) is in a secured area; with only a web server **801** being directly accessible from the Internet, the security of the embodiment can be further enhanced by having the authentication module **945** run on the same Java Virtual Machine ("JVM") to take advantage of the Java security model.

*(b) Monitoring*/*Reporting*/*Logging Service Module.* In the preferred embodiments of the present invention, this module **950** handles the following tasks:
1) monitors the status of the servers;
2) reports abnormalities to responsible person(s); and
3) logs meaningful events (e.g., logs errors and exceptions to one or more log files; logs user events to a database).

For the monitoring and reporting tasks, a third party commercial monitoring and reporting tool, such as *SiteScope* (Version 4.0 and above), offered by Freshwater Software, Inc., is adequate. If a third party tool is used, then one of ordinary skill in the art will implement the PXa³ application server to include hooks (and triggers) for the monitoring and reporting tool.

Meaningful events that preferably should be logged mainly fall into two categories: (a) errors and exceptions; and (b) user events. Errors and exceptions are logged so that a server administrator can later diagnose server problems; user events are valuable information for purposes such as billing, auditing and server performance evaluating.

Depending upon the monitoring and reporting tool chosen, it may be desirable to leave the task of logging certain types of errors and exceptions to that tool. However, in most cases, it is desirable to have error logs in a single place. Furthermore, it is possible that the log of the chosen monitoring and reporting tool does not contain the exact information needed for diagnosing the PXa³ application server **805.** As a result, it is preferred to log error and exception information independently of the tool. Error and exception logs are preferably stored in one or more log files.

Naturally, error reporting and logging is closely related to exception handling and recovery. In the preferred embodiments of the PXa³ application server design, errors are categorized into three types:
1) Fatal System Error: a system level error that renders a (sub-) system of the server unrecoverable without human intervention.
2) Critical Error: an error that makes a function nonfunctional under certain conditions. Critical errors are normally unrecoverable unless the conditions change.
3) Non-Critical Error: an error from which an automatic recovery is possible.

In the preferred embodiments, all fatal system errors should be logged, as well as most critical errors. In addition, all fatal system errors should be reported as well. Some critical errors should also be reported. Depending upon the specific implementation of a PXa³ system, it may also be desirable to log some non-critical errors, but in most cases, it is advisable not to log them if a recovery attempt succeeds.

In contrast, the preferred place to store user event information is in a database for the convenience of querying and sorting. Exactly what events need to be logged is more a marketing decision than a design decision, and thus depends upon the specific implementation. In the preferred embodiments, the domain authority/workgroup administrator should be allowed to enable and/or disable user event logging. It is suggested that events be classified into three categories: required, desired, and optional. Only the events in the latter two categories should be able to be disabled by the domain authority/workgroup administrator. Events required for billing and auditing preferably should be given a required rating.

It is extremely important that the monitoring and reporting service be reliable. False alarms are at best annoying, but failure to report a fatal error can be disastrous. When a non-critical error occurs, a recovery should be attempted. Under some conditions, the same error can occur recurrently. This is particularly true when the cause of the non-critical error is some other, undetected critical or fatal error. The preferred embodiments will therefore include a mechanism that upgrades to critical any non-critical error that repeats itself for a number of times during recovery. In such a case, further recovery attempts are abandoned and the user is informed.

In most cases, non-critical errors need not be logged if recovery is successful. If user event logging is implemented, it is preferable to have a database connection pool of some kind to enhance performance.

*(c) Billing*/*Auditing Service Module.* This module **955** provides a billing/auditing interface. In the preferred embodiments, the billing/auditing service module 955: (a) queries database tables for information, as dictated by established billing requirements at a preset time interval; (b) generates a billing report for the company offering (running) the PXa³ service; and (c) stores the report in a database table or in a file.

Like the server administration module **940,** the billing/auditing module **955** is the static side of user event logging. In other words, the billing/auditing module **955** is the user of the user event logs. In essence, the billing/auditing service module is nothing but a web-based database application that makes use of the user event data logged by the monitoring/reporting/logging module **950.** In the preferred embodiments, billing will be based on an active time-based subscription. As result, specific usage data of an individual user may have no significance to billing. Nonetheless, these data are still valuable for auditing purposes, and in the case that a customer organization may want to bill on a basis other than time periods *(e.g.,* number of member accesses).

Billing report generation, like any server maintenance tasks, must not impair the normal usage of members. Thus, in the preferred embodiments, so as not to impact normal usage of the server, billing reports are generated from a mirrored copy of the data. The operation of mirroring and synchronizing the data between the production copy and the mirror copy should preferably be scheduled to happen at a time when member usage is the lightest. It is recommended that this time be made configurable by the server administrator **830.**

It is also advisable that generating a billing report does not take a prolonged period of time. It is desirable, for example, to generate a summary every day for that day's activity, rather than do it all together at the end of each month, even if the billing cycle is one month. In the preferred embodiments, a mechanism to generate a monthly report based on the daily report is included.

### (b) Logical Configuration

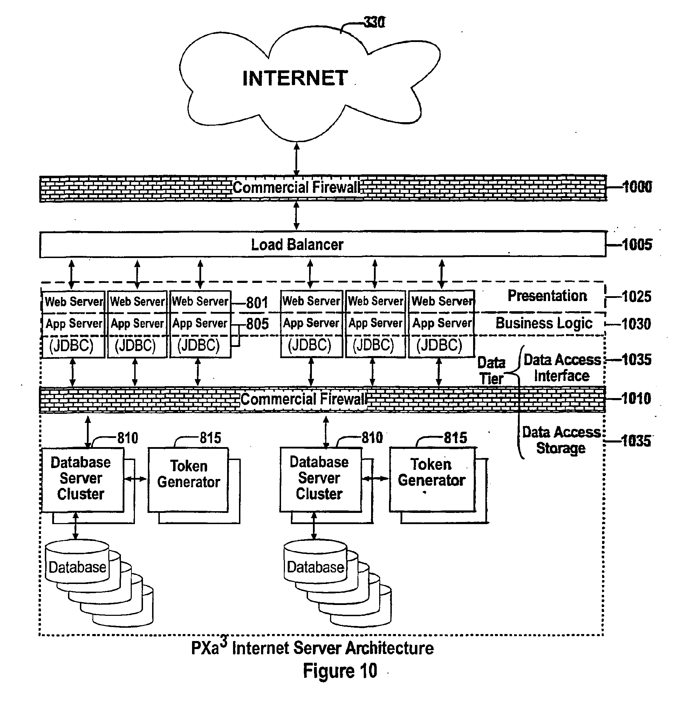

The PXa³ server system 800 (Figure 8) has a typical three-tier architecture, which is well known to one of ordinary skill in the art. As shown in **Figure 10,** at the front is a presentation tier **1025** that interacts with the user directly; in the middle is a business logic tier **1030** where logic flow and data processing happens; in the back is a data tier **1035** where persistent data are stored. One of ordinary skill in the art will appreciate that, as in any typical Internet deployment, a firewall **1000** and load balancer **1005** are placed between, the Internet **330** and one or more PXa³ web server(s) **801.** Preferably, an additional firewall **1010** is placed between the application server(s) 805 and database and token generators **(810** and **815,** respectively) to provide isolated physical subnets.

This multi-tier design provides separation between various functional components of the PXa³ server system 800. With a well-defined interface between these tiers, each tier becomes a system component that can be developed and maintained separately. Thus, each tier can be scaled separately, which greatly enhances the scalability of the entire system.

### (1) The Presentation Tier

A PXa³ system preferably uses a flexible user interface that may specifically be tailored to a wide variety of customer-branded look and feel requirements. Thus, the preferred embodiments of the present invention use a PXa³ server architecture design that segregates the presentation components from the business logic components: adopting a three-tier implementation affords customers flexibility in customizing everything from background color to the icons associated with data presentation. Additionally, PXa³ frames can readily be embedded into existing customer pages.

The presentation tier **1025** is the tier that interacts with the user. In a multi-tiered, web-based solution, the presentation tier consists of two sub-tiers. One sub-tier is a web client running on the user's computing device, such as a desktop system. A typical example of such a client is a web browser, such as Internet Explorer or Netscape Navigator. The other sub-tier comprises web pages, which reside on a PXa³ web server **801** and are downloaded to the web client for display.

In the preferred embodiments, what constitutes a web client sub-tier depends upon whether or not the user interaction is member access or domain authority/workgroup administrator access. In the case of member access, the web client is a specially developed client system called a PXa³ member client **850** (Figure 11, further described below), specifically designed for member access. In the preferred embodiments, a PXa³ member client acts as an agent between a PXa³-enabled application (such as Microsoft Word) and the PXa³ application server, and retrieves a member token for the PX³-enabled application from the PXa³ server system upon request. In the case of domain authority/workgroup administrator access and server administration access, the web client is a web browser 831 and 832, respectively (Figure 8). Exactly which browser is used, however, is a minor issue that bears little consequence to the server design.

In the case of DA access, for example, a domain authority may use a web browser to communicate with the PXa³ server system and to input member information and credentials. The browser transmits the information to the server system for the purpose of creating a member token. Selection of a web browser for this purpose can be any commercially available product, such as Internet Explorer or Netscape Navigator.

In the preferred embodiments, the presentation tier **1025** (Figures 9 and 10) of the PXa³ web server **801** (Figure 10) includes various static HTML pages, JSP pages and servlets. With the usage of EJBs and a J2EE based application server such as the BEA WebLogic server, it is preferred to minimize the usage of servlets, since the presentation functions are best fulfilled by JSPs and the business logic functions should be at the business logic tier **1030** (Figures 9 and 10) and performed by various EJBs **936** (Figure 9).

With respect to the modules for the above described embodiments of the present invention, the member access and token retrieval module **930,** DA access module **935,** server administration module **940,** and possibly the billing/auditing module **955** all relate in some way to the presentation tier **1025.** (The billing/auditing module is a little special. In the case of multiple domains, it is expected that both the server administrator **830** and the domain administrators may need to check the billing/auditing records, albeit with different scope. In a more complicated scenario, it may be the case that the persons who have rights to checking billing records do not necessarily have administrative privileges. In any case, a web-based interface for billing/auditing record checking are present in the preferred embodiments.)

*(a) Presentation Tier Of The Member Access Module.* In the preferred embodiments, the presentation tier 1025 of the member access and token retrieval module **930** (Figure 9) should provide at least the following functions:
1) accept client requests in a format as defined by a member access protocol, and pass the requests to the business logic tier **1030** for processing; and
2) obtain a return object from the business logic tier about the results of client requests, and present the results to the client in a format defined by the member access protocol.

It must be stressed that, in the preferred embodiments of the present invention, the presentation tier **1025** of the member access and token retrieval module **930** is special, in that the web client part of this tier is not a browser-rather, it is specially designed for a PXa³ system (further described below). As a result, the response to a client request need not follow HTML format, so long as the response can be understood by the PXa³ client (for example, the response follows a proprietary member access protocol and is HTTP-based). Hence, it is advisable that the presentation tier **1025** of the member access and token retrieval module **930** be implemented in servlets rather than JSP pages.

*(b) Presentation Tier of the DA Access Module.* In the preferred embodiments of the present invention, the presentation tier 1025 of the DA access module 935 (Figure 9) should provide at least the following functions:
1) accept a client request in HTML format and as defined by a DA access protocol, and pass the request to the business logic tier **1030** for processing;
2) get a return obj ect from the business logic tier about the results of client requests, and direct the requesting user to the relevant URLs accordingly.

It is recommended that the presentation tier **1025** of the DA access module **935** be implemented in JSP pages, since the DA web client is preferably a browser.

*(c) Presentation Tier For The Server Administration Module.* In the preferred embodiments of the present invention, the presentation tier 1025 for the server administration module **940** provides at least the following functions:
1) accept a client request in HTML format and as defined by a server administration protocol, and pass the request to the business logic tier **1030** for processing;
2) get a return object from the business logic tier about the results of client requests, and direct the requesting user to the relevant URLs accordingly.

It is recommended that the presentation tier **1025** of the server administration module **940** be implemented in JSP pages, since (in the preferred embodiment) the web client is a browser. It is further recommended that the design of the presentation tier take into account the fact that, in the preferred embodiments, there are three independent web applications in the PXa³ application server **805** (Domain Access, Member Access and Server Administration). Thus, there should be a degree of separation among the presentation tier of the three web applications. Preferably, interaction between Web applications should occur at the business logic tier **1030** or perhaps at the data tier **1035,** using a notification/messaging service such as the Java Messaging Service ("JMS").

### (2) The Business Logic Tier

In the preferred embodiments of the present invention, the business logic tier **1030** of a PXa³ server system is implemented by various EJBs 936 (Figure 9) in a J2EE based application server. This tier is in the middle of the other two tiers in the PXa³ server system **800.** For this reason, the business logic tier is also called middle tier. In J2EE terminology, it is also called EJB tier.

A J2EE based solution is easily portable from one platform to another. In particular, as long as the design and implementation of the PXa³ application server 805 follows the J2EE specifications, the PXa³ server solution can be deployed onto a number of different platforms. To date, various J2EE-based application servers are available from different vendors for many flavors of Unix and Windows platforms. For example, the WebLogic Server from BEA Systems is available for both Unix and Windows platforms, as well as the IBM WebSphere Server.

In the preferred embodiments, all the six server modules (described above) are involved in the business logic tier.

*(a) Business Logic Tier Of The Member Access Module.* In the preferred embodiments of the present invention, the business logic tier 1035 of the member access and token retrieval module 930 (Figure 9) performs at least the following functions:
1) processes member client requests;
2) checks the authentication information, and asks the member client for more information, if needed;
3) in the event that a single application server hosts multiple domains, it checks the domain information for the member client and decides on the relevant database to query for the stored member information;
4) conveys member information to the authentication module 945 (Figure 9) for verification;
5) checks the return result from the authentication module 945, and decides whether or not the result has authenticated the member 105 (Figure 2);
6) retrieves and delivers an appropriate member token 122 (Figure 8) if the member authentication has succeeded;
7) prepares a response for the presentation tier **1025** to present to the member **105;** and
8) requests the monitoring/reporting/logging service module **950** (Figure 9) to log meaningful events.

As described above, in the preferred embodiments of the present invention, member access is stateless. Hence, there is no need to store sessions in the business logic tier **1030** for the member access and token retrieval module **930** (Figure 9), and the member access session bean is a stateless one.

*(b) The Business Logic Tier For The DA Access Module.* In the preferred embodiments, the business logic tier **1030** for the DA access module **935** (Figure 9) provides at least the following functions:
1) processes DA client requests;
2) checks the authentication information, and asks the DA client for more information if needed;
3) if multiple domains are supported, checks the domain information to determine which relevant database to query for the stored DA information;
4) conveys DA client information to the authentication module **945** (Figure 9) for verification;
5) checks authentication result;
6) sets up an administrative session after an initial login procedure succeeds;
7) when necessary, makes requests to the token generator **815** (Figure 8);
8) according to the return results from authentication module **945** (and, if applicable, the token generator **815),** prepares a response for the presentation tier **1025** to present to a domain administrator **(125,126,** or **140;** Figure 2);
9) requests the monitoring/reporting/logging service module **950** (Figure 9) to log meaningful events; and
10) cleans up the session after receiving a domain administrator logout request, or after being timed out.

In one embodiment of a PXa³ server design, DA access is stateful. As a result, the DA access session bean is a stateful one.

*(c) The Business Logic Tier For The Server Administration Module.* In the preferred embodiments of the present invention, the functions required for the business logic tier **1030** of this module **940** (Figure 9) parallel those of the DA access module **935** (Figure 9), with two exceptions: first, in the server administration module, **940** there is no need to check domain information, because a server administrator **830** (Figure 8) does not belong to any CKM domain **100** (Figure 2); second, there is no need to call the token generator **815.** Rather than these two functions, the server administration module **940** performs various server administration tasks. Thus, in the preferred embodiments of the present invention, the business logic tier **1030** of the server administration module **94**0 performs at least the following functions:
1) processes administrator client requests;
2) checks the authentication information, and asks the client for more information if needed;
3) conveys administrator client information to the authentication module **945** (Figure 9) for verification;
4) checks the returned result from the authentication module **945**;
5) sets up a session after an initial login succeeds;
6) performs various server administration tasks (as described above);
7) according to the results returned from authentication module **945** and the server administration tasks requested, prepares a response for the presentation tier **1025** to present to the server administrator **830** (Figure 8);
8) requests the monitoring/reporting/logging service module **950** (Figure 9) to log meaningful events; and
9) cleans up the session after receiving an administrator logout request, or after being timed out.

In the preferred PXa³ server design, server administrator access is stateful. As a result, the server administrator access session bean is a stateful one.

*(d) The Business Logic Tiers Of The Auxiliary Modules.* Referring to Figure 9, the authentication module **945,** monitoring/reporting/logging service module **950,** and billing/auditing service module **955** each execute all of their respective functions in the business logic tier **1035**. Those functions are described above.

As was mentioned before, the preferred embodiments of the present invention use three web applications in the PXa³ application server **805**. These three web applications run in different virtual memory address space inside the same Java Virtual Machine ("JVM"). Under some circumstances, these web applications need to interact with each other. Some of the interactions can be static, in the sense that one application stores a piece of information in a database, and another application queries the database for the information. More often than not, however, an application must commumicate with another application dynamically. In this case, an application needs to notify another application about status changes that may affect the execution of that other application. For this reason, in the preferred embodiments of the present invention, interweb application communications are accomplished using the Java Messaging Service (JMS) of the J2EE platform.

### (3) The Data Access Tier

The data access tier **103**5 is where persistent data is stored. In the preferred embodiments, the data access layer provides support for concurrent multiple domains to reside within a single (or multiple) database server(s), in order to achieve an economically efficient and scalable deployment required for co-location facilities. If a customer desires to operate the service internally for performance or security reasons, then a single domain may be configured within a single database server.

In the preferred embodiments, token generation is a batch process. Member tokens **122** (Figures 2 and 8) are preferably stored in a specially designed, secure file system. Also in the preferred embodiments, all domain-specific sensitive information is stored in encrypted form. Audit trails are constructed each time the database is modified by trapping both the old and new values using, for example, native Oracle database modification. mechanisms. As described above, the preferred embodiments include a monitoring/reporting module **950** (Figure 9) that provides historical logging on connections, token requests (including, for example, requests for member indemnification, timestamp, connection, and token served), and administrative changes.

In the preferred embodiments, the data that is stored in the data tier 1035 is categorized into four types: (a) server configuration information; (b) domain information; (c) membership information; and (d) member tokens. For each category of data, a separate data access module is developed for efficient and secure data access.
(*a*) *Server Configuration Information.* In the preferred embodiments, and in contrast to other information, server configuration information is stored in various files. The configuration properties in these files are loaded into the memory when the servers are started up. After being loaded into the memory, some application-specific information may be stored in an application-wide memory storage such as servlet context. By storing the server configuration information in files rather than a database, the risk of any server failure as a result of database failure is minimized.
*(b) Domain Information.* In the preferred embodiments, domain information may be stored in database tables or ACL configuration files. It is also possible to store this information using Java Network Directory Interface ("JNDI").
*(c) Membership Information.* In the preferred embodiments, membership information is stored in database tables. Depending on customer requirements and the specific implementation, in the case of multiple domain support, the membership information database for different domains may be in separate tables in the same database, separate databases on the same database server, or on separate machines. Database access should be transaction-based, and it is recommended that Java Transaction Service ("JTS") be used as the data access mechanism. This will ensure the data integrity and data consistency of multiple concurrent user accesses from multiple servers. However, one of ordinary skill in the art will recognize that with any well designed and developed database access mechanism, development and maintenance efforts are reduced.
*(d) Member Tokens.* As described above, the preferred embodiments implement token generation as a batch process, instead of a real time process, so as to avoid a performance bottleneck of token generation. Thus, when a domain administrator requests that a member token be created, the request is first queued. Referring back to Figure 8, the token generator 815 later checks the queue and creates tokens (one method of token generation is described in further detail below). In the preferred embodiments, the token generator 815 also takes responsibility for storing the newly created tokens in the secure token storage of the database server(s) **810.** As mentioned above, the preferred embodiments employ the TECSEC CKM 5.1 product as the token provider **817.** The token generator **815** creates a member token file from an individual's member account information (including the member's [access permissions] security profile **120)** and stores it in encrypted form in the secure token storage of the database server(s) **810.** Preferably, member tokens are stored in a specially designed file system. As a result, an internal token storage standard is defined so that both the token generator **815** and the member access and token retrieval module 930 (Figure 9) can follow the same database convention.

The database **810** also stores all information concerning the availability of an individual member's token **122** (Figure 8). When a member token is available and is enabled for retrieval, the member access and token retrieval module 930 (Figure 9) retrieves the token and transmit it to the requesting member.

### 2. The Member Client Design

In the preferred embodiments, the administrator client implementation is designed to use commercially available browsers for the domain authority, workgroup administrator, server administrator and security officer functions. The member client application, however, preferably uses a specifically adapted design. Although in the preferred embodiments domain administrators (domain authority **125** and workgroup administrators **145**) do not necessarily need to have a member client application **850** resident on their local computing device for administrative functionality, administrators may need it if they ever desire to encrypt or decrypt files, since a security profile **120** (and associated member token **122**) is required for cryptographic capability. A browser-based implementation is, however, otherwise sufficient for the administration functions and their associated security-level requirements (as detailed above), and where scalability is less important.

In the preferred embodiments, all client connections follow the HTTPS standard, and client requests are realized through form submissions, entered by a member via an on-line, user interface. Furthermore, in addition to SSL encryption, all PXa³ client-server transmission data is optionally encrypted at the application level with pre-defined encryption key selections, and there will be no key exchange process in the application level.

Also in the preferred embodiments, the PXa³ member client package is packed into a self-extract Win32 executable Setup file, so that members can download and execute this Setup file via the web. Ideally, the package installation procedure records the changes made to the member's client system, so that the package removal procedure can reverse those changes. The package installation procedure will also copy the PXa³ token provider modules (described below) to the appropriate destination path(s), and set up all required Windows registry and desktop short cuts. The final step of the package installation will launch the member client application.

One embodiment of an overall client architecture and its major component relationships are shown in **Figure 11.** A PXa³ member client application (system) **850** is available to be downloaded by a member **105** (Figure 2) as soon as a workgroup administrator **140** (Figure 2) has set up his or her member account **300** (Figure 2) at the PXa³ web site **305** (Figure 2). The member client application **850** contains both a CKM Run Time Environment (including cryptographic libraries and functions) **855** and a PXa³ token provider **860.** The PXa³ token provider **860** further comprises: (a) a token retrieval module **861,** which facilitates member access and server communication functionalities; (b) a session definition module **870**, which provides for token expiration; and (c) a CKM token provider module **875,** which enables encryption and decryption functionalities and provides for token file handling.

The member client application **850** also works with a generic object encryptor **856,** which performs the data object encryption and decryption, and various application plugins **857** and other applications **858.** In the preferred embodiments, the generic object encryptor **856** will encrypt and decrypt any data object type, but would not deal with objects smaller than a complete file. A plugin, however, is designed to work within a specific application, such as, for example, Microsoft Word, so that objects can be designated as subset parts of a typical file. The member client application also preferably includes an authentication module **880**, for managing user authentication processes at the level of the member client system, and a user interface module **885.**

In the preferred embodiments, the CKM token provider module **875** of the member client application **850** utilizes the commercially available CKM application offered by TECSEC, mentioned earlier, which implements the ANSI X9.69 encryption standard. The TECSEC product provides software for the both the CKM Run Time Environment ("RTE") **855** and the CKM token provider **875** in the preferred embodiments of the member client application. This commercially available product provides a CKM runtime environment which includes: (a) utility software that allows members to locally manage their member tokens; (b) utility software to encrypt/decrypt a user's CKM files; (c) TECSEC proprietary token provider software, used as the CKM token provider module **875** of the preferred embodiment; and (d) proprietary TECSEC runtime libraries and tools for developing a working interface between the TECSEC product and the specific implementation of the PXa³ member client application.

Also in the preferred embodiments, a module called the "PXa³ session manager" **865** manages the retrieval of member tokens **122** (Figure 8) from the secure central storage **810** of a PXa³ server system **800** to the member's client system via a secure delivery channel. As described above, using the TECSEC CKM product as a CKM token provider **817** (Figure 8) within the token generator **815** (Figure 8) of the server system 800, a member token file is encrypted, hashed and then stored. The token file includes member account information, which is specific to the particular implementation and contains the member's access permissions security profile **120** (Figure 2). The member client application. **850** also includes a member token expiration mechanism (further described below).

The member authentication module **880** of the PXa³ member client application **850** initiates authentication (using any of the authentication schemes described previously) when a login fimction in the PXa³ token provider **860** is invoked. To ease the burden of the PXa³ server system **800,** the PXa³ member client application **850** also performs algorithms to protect against incorrect passwords used in the authentication process, according to a specifically established domain policy. For example, after a certain amount of wrong password attacks, the member token retrieval request is denied until a certain amount of elapsed time.

Upon successful authentication, if there is no physical presence of the member token within the client system, or if the existing member token has expired, the PXa³ session manager **865** will attempt to retrieve the member's latest token from the PXa³ server system **800** via the Internet **330.** In such a case, at least the following data will be sent to the PXa³ server system to qualify the retrieval of a new member token via a "retrieve token request":
1) the member's domain name, indicating the domain to which that the member belongs;
2) a User ID and/or password, identifying the member for purposes of authentication; and
3) a serial number, uniquely identifying the member's client system (and is created during the member client package installation)

Although the preferred embodiments invoke token retrieval automatically via the session manager **865,** it is conceivable that members can also manually request to load a member token **122** via some other convenience tool, *e.g.,* one provided by the commercial TECSEC CKM product. In either case, requests for member tokens occur *in-band-*in other words, a request is initiated (either manually by the user or automatically by the PXa³ session manager) using the same application currently running on the member's client system, and the request is transmitted over the same communication network connection as that used by the PXa³ system to distribute encrypted data objects/digital content over the network.

Additionally, in the preferred embodiments of the present invention, there are at least two types of requests from a member client to the PXa³ server system: one is a "retrieve token request," described above; the other is a "change password request". As described above, the "retrieve token request" may be sent either automatically by the PXa³ session manager, or manually by the member. The "change password request" is provided to allow a member to change his or her password on demand. This request passes a new password, a confirmed password, and all the parameters listed above as comprising the information included in "retrieve token request." If a "change password request" is successful the PXa³ server system returns a new member token with an updated password in effect. Other embodiments may provide for additional types of client-to-server requests (for example, a "recover request" initiated by a member for the purpose of recovering a forgotten password).

In the preferred embodiments, the member client application includes a progress meter indicating the member token retrieval progress. Automatic retries are attempted if the member token retrieval communication between the PXa³ session manager **865** and the PXa³ server system **800** is broken. After a successful member token retrieval, the member token will be stored in an appropriately defined location, along with the proper Windows registry modifications. In the preferred embodiments, the retrieved member token, comprising encrypted member security profile information, is "wrapped" within a data object conforming to the soft token requirements of the TECSEC CKM product before it can be used for encrypting/decrypting by the member.

### 3. PXa³ Session Expiration

A PXa³ session is opened upon a first request for a member token from the PXa³ server system. A session remains established (and is therefore defined) during the operational life of a member token within the PXa³ client system. A session terminates upon token expiration. In the preferred embodiments of the present invention, there are three levels at which member token expiration can be modified: (a) at the domain authority level; (b) at the workgroup administrator level; and (c) at the member level. Each level supports member token expiration based on, for example, one or more of the following criteria:
1) a specified number of accesses to encrypted data objects (as, for example, free trials in the context of content vending);
2) whether or not the member token is RAM-resident or stored in nonvolatile storage on the user's client system (i.e., token expiration upon closing a CKM-enabled applications versus persistence of the token for future use, even after a CKM-enabled application has been closed);
3) elapsed time; or
4) flush on demand (i.e., a command to expire the token is explicitly made by the member).

In the preferred embodiments, a member token is determined to be expired if any one of these expiration criteria is met at any level. Upon expiration, the member token is flushed and removed from the member client system, and a new token retrieval request is issued automatically by the PXa³ session manager. If the newly retrieved token is still determined to be expired, then that token is also flushed and removed, and no more new token retrieval requests will issue until a configurable elapsed time has passed.

In addition, one embodiment supports a token expiration mechanism that includes "member roaming" by a fixed date, or number of days and hours. The date and days are measured based on the date and time as perceived by the administrator's time zone.

While the foregoing describes a number of preferred embodiments and implementations of the present invention, a person having ordinary skill in the art will recognize that still other embodiments and implementations of the general technique for a web-based application service model herein disclosed are possible. It is therefore intended that the scope of the invention be limited only by the claims appended below.

## Claims

1. A method for controlling access to a secured system, the method comprising:
(a) selecting (700) one or more portions of the system to be secured;
(b) creating (705) one or more groups of system users, said groups defining which users are to be allowed access to which secured portions of the system;
(c) establishing (710) one or more access codes for each group;
(d) assigning (715) the access codes to the secured portions of the system, wherein each access code is adapted to be combined with other components to form a key for controlling access to one or more secured portions of the system.
(e) securing (230) the access codes; and
(f) distributing (720) over a decentralized public network (330) the secured access codes to users of the system who are to be allowed access to one or more of the selected portions of the system.

2. The method of claim 1, wherein the secured system is a physical system.

3. The method of claim 1, wherein the secured system is a computer network.

4. The method of claim 1, wherein the secured access codes are at least partially secured through biometric identification.

5. The method of claim 1, wherein the secured access codes are at least partially secured through a software token.

6. The method of claim 1, wherein the secured access codes are at least partially secured through a hardware token.

7. The method of claim 1, wherein the secured access codes are at least partially secured through a password.

8. The method of claim 1, wherein the secured access codes are at least partially secured by the use of a record of time at which the request was made.

9. The method of claim 1, wherein the secured access codes are at least partially secured by the use of a record of a user's physical location.

10. Apparatus for controlling access to a secured system, comprising:
(a) means (700) for selecting one or more portions of the system to be secured;
(b) means (705) for creating one or more groups of system users, said groups defining which users are to be allowed access to which secured portions of the system;
(c) means (710) for establishing one or more access codes for each group;
(d) means (715) for assigning the access codes to the secured portions of the system, wherein each access code is adapted to be combined with other components to form a key for controlling access to one or more secured portions of the system.
(e) means (230) for securing the access codes; and
(f) means (720) for distributing over a decentralized public network (330) the secured access codes to users of the system who are to be allowed access to one or more of the selected portions of the system.

11. The apparatus of claim 10, wherein the secured system is a physical system.

12. The apparatus of claim 10, wherein the secured system is a computer network.

13. The apparatus of claim 10, wherein the secured access codes are at least partially secured through biometric identification.

14. The apparatus of claim 10, wherein the secured access codes are at least partially secured through a software token.

15. The apparatus of claim 10, wherein the secured access codes are at least partially secured through a hardware token.

16. The apparatus of claim 10, wherein the secured access codes are at least partially secured through a password.

17. The apparatus of claim 10, wherein the secured access codes are at least partially secured by the use of a record of time at which the request was made.

18. The apparatus of claim 10, wherein the secured access codes are at least partially secured by the use of a record of a user's physical location.

## Patentansprüche

1. Verfahren zum Regulieren des Zugriffs auf ein sicheres System, wobei das Verfahren die folgenden Schritte beinhaltet:
(a) Auswählen (700) von ein oder mehreren Teilen des Systems zum Sichern;
(b) Erzeugen (705) von einer oder mehreren Gruppen von Systembenutzern, wobei die genannten Gruppen definieren, welchen Benutzern Zugang zu welchen gesicherten Teilen des Systems gewährt werden soll;
(c) Erstellen (710) von ein oder mehreren Zugangscodes für jede Gruppe;
(d) Zuweisen (715) der Zugangscodes zu den gesicherten Teilen des Systems, wobei jeder Zugangscode so gestaltet ist, dass er mit anderen Komponenten zu einem Key zum Regulieren des Zugriffs auf ein oder mehrere gesicherte Teile des Systems kombiniert werden kann;
(e) Sichern (230) der Zugangscodes; und
(f) Verteilen (720) der gesicherten Zugangscodes über ein dezentralisiertes öffentliches Netzwerk (330) zu Benutzern des Systems, denen der Zugang zu ein oder mehreren der gewählten Teile des Systems gewährt werden soll.

2. Verfahren nach Anspruch 1, wobei das gesicherte System ein physikalisches System ist.

3. Verfahren nach Anspruch 1, wobei das gesicherte System ein Computernetzwerk ist.

4. Verfahren nach Anspruch 1, wobei die gesicherten Zugangscodes wenigstens teilweise durch biometrische Identifikation gesichert werden.

5. Verfahren nach Anspruch 1, wobei die gesicherten Zugangscodes wenigstens teilweise durch ein Software-Token gesichert werden.

6. Verfahren nach Anspruch 1, wobei die gesicherten Zugangscodes wenigstens teilweise durch ein Hardware-Token gesichert werden.

7. Verfahren nach Anspruch 1, wobei die gesicherten Zugangscodes wenigstens teilweise durch ein Passwort gesichert werden.

8. Verfahren nach Anspruch 1, wobei die gesicherten Zugangscodes wenigstens teilweise mittels einer Aufzeichnung des Zeitpunkts gesichert werden, an dem die Anforderung erfolgte.

9. Verfahren nach Anspruch 1, wobei die gesicherten Zugangscodes wenigstens teilweise mittels einer Aufzeichnung des physikalischen Ortes eines Benutzers gesichert werden.

10. Vorrichtung zum Regulieren des Zugriffs auf ein gesichertes System, die Folgendes umfasst:
(a) Mittel (700) zum Auswählen von ein oder mehreren Teilen des Systems zum Sichern;
(b) Mittel (705) zum Erzeugen von ein oder mehreren Gruppen von Systembenutzern, wobei die genannten Gruppen definieren, welchen Benutzern Zugang zu welchen gesicherten Teilen des Systems gewährt werden soll;
(c) Mittel (710) zum Erstellen von ein oder mehreren Zugangscodes für jede Gruppe;
(d) Mittel (715) zum Zuweisen der Zugangscodes zu den gesicherten Teilen des Systems, wobei jeder Zugangscode so gestaltet ist, dass er mit anderen Komponenten zu einem Key zum Regulieren des Zugriffs auf ein oder mehrere gesicherte Teile des Systems kombiniert werden kann;
(e) Mittel (230) zum Sichern der Zugangscodes; und
(f) Mittel (720) zum Verteilen der gesicherten Zugangscodes über ein dezentralisiertes öffentliches Netzwerk (330) an Benutzer des Systems, denen der Zugang zu ein oder mehreren der ausgewählten Teile des Systems gewährt werden soll.

11. Vorrichtung nach Anspruch 10, wobei das gesicherte System ein physikalisches System ist.

12. Vorrichtung nach Anspruch 10, wobei das gesicherte System ein Computernetzwerk ist.

13. Vorrichtung nach Anspruch 10, wobei die gesicherten Zugangscodes wenigstens teilweise durch biometrische Identifikation gesichert sind.

14. Vorrichtung nach Anspruch 10, wobei die gesicherten Zugangscodes wenigstens teilweise durch ein Software-Token gesichert sind.

15. Vorrichtung nach Anspruch 10, wobei die gesicherten Zugangscodes wenigstens teilweise durch ein Hardware-Token gesichert sind.

16. Vorrichtung nach Anspruch 10, wobei die gesicherten Zugangscodes wenigstens teilweise durch ein Passwort gesichert sind.

17. Vorrichtung nach Anspruch 10, wobei die gesicherten Zugangscodes wenigstens teilweise mittels einer Aufzeichnung des Zeitpunkts gesichert sind, an dem die Anforderung gemacht wurde.

18. Vorrichtung nach Anspruch 10, bei der die gesicherten Zugangscodes wenigstens teilweise mittels einer Aufzeichnung des physikalischen Ortes eines Benutzers gesichert sind.

## Revendications

1. Procédé de commande de l'accès à un système sécurisé, le procédé comprenant :
(a) la sélection (700) d'une ou de plusieurs parties du système à sécuriser ;
(b) la création (705) d'un ou de plusieurs groupes d'utilisateurs système, lesdits groupes définissant les utilisateurs qui sont autorisés à accéder à telles ou telles parties sécurisées du système ;
(c) l'établissement (710) d'un de plusieurs codes d'accès pour chaque groupe ;
(d) l'affectation (715) des codes d'accès aux parties sécurisées du système, dans lequel chaque code d'accès est adapté pour être combiné à d'autres composantes afin de former une clé pour commander l'accès à une ou plusieurs parties sécurisées du système.
(e) la sécurisation (230) des codes d'accès ; et
(f) la distribution (720) sur un réseau public décentralisé (330) des codes d'accès sécurisés aux utilisateurs du système qui doivent être autorisés à accéder à une ou plusieurs des parties sélectionnées du système.

2. Procédé selon la revendication 1, dans lequel le système sécurisé est un système physique.

3. Procédé selon la revendication 1, dans lequel le système sécurisé est un réseau informatique.

4. Procédé selon la revendication 1, dans lequel les codes d'accès sécurisés sont au moins partiellement sécurisés par identification biométrique.

5. Procédé selon la revendication 1, dans lequel les codes d'accès sécurisés sont au moins partiellement sécurisés par un jeton logiciel.

6. Procédé selon la revendication 1, dans lequel les codes d'accès sécurisés sont au moins partiellement sécurisés par un jeton matériel.

7. Procédé selon la revendication 1, dans lequel les codes d'accès sécurisés sont au moins partiellement sécurisés par un mot de passe.

8. Procédé selon la revendication 1, dans lequel les codes d'accès sécurisés sont au moins partiellement sécurisés par l'utilisation d'un enregistrement du temps auquel la requête a été effectuée.

9. Procédé selon la revendication 1, dans lequel les codes d'accès sécurisés sont au moins partiellement sécurisés par l'utilisation d'un enregistrement de l'emplacement physique d'un utilisateur.

10. Appareil de commande de l'accès à un système sécurisé, le procédé comprenant :
(a) un moyen (700) pour sélectionner une ou plusieurs parties du système à sécuriser ;
(b) un moyen (705) pour créer un ou plusieurs groupes d'utilisateurs système, lesdits groupes définissant les utilisateurs qui sont autorisés à accéder à telles ou telles parties sécurisées du système ;
(c) un moyen (710) pour établir un ou plusieurs codes d'accès pour chaque groupe ;
(d) un moyen (715) pour affecter les codes d'accès aux parties sécurisées du système, dans lequel chaque code d'accès est adapté pour être combiné à d'autres composantes afin de former une clé pour commander l'accès à une ou plusieurs parties sécurisées du système.
(e) un moyen (230) pour sécuriser les codes d'accès ; et
(f) un moyen (720) pour distribuer sur un réseau public décentralisé (330) les codes d'accès sécurisés aux utilisateurs du système qui doivent être autorisés à accéder à une ou plusieurs des parties sélectionnées du système.

11. Appareil selon la revendication 10, dans lequel le système sécurisé est un système physique.

12. Appareil selon la revendication 10, dans lequel le système sécurisé est un réseau informatique.

13. Appareil selon la revendication 10, dans lequel les codes d'accès sécurisés sont au moins partiellement sécurisés par identification biométrique.

14. Appareil selon la revendication 10, dans lequel les codes d'accès sécurisés sont au moins partiellement sécurisés par un jeton logiciel.

15. Appareil selon la revendication 10, dans lequel les codes d'accès sécurisés sont au moins partiellement sécurisés par un jeton matériel.

16. Appareil selon la revendication 10, dans lequel les codes d'accès sécurisés sont au moins partiellement sécurisés par un mot de passe.

17. Appareil selon la revendication 10, dans lequel les codes d'accès sécurisés sont au moins partiellement sécurisés par l'utilisation d'un enregistrement du temps auquel la requête a été effectuée.

18. Appareil selon la revendication 10, dans lequel les codes d'accès sécurisés sont au moins partiellement sécurisés par l'utilisation d'un enregistrement de l'emplacement physique d'un utilisateur.
